(19) Europäisches Patentamt
European Patent Office
Office européen des brevets

(11) **EP 4 757 463 A1**

(12) **EUROPEAN PATENT APPLICATION**
published in accordance with Art. 153(4) EPC

(43) Date of publication:
**10.06.2026 Bulletin 2026/24**

(21) Application number: **23947108.9**

(22) Date of filing: **02.08.2023**

(51) International Patent Classification (IPC):
***H04W 72/1268*** (2023.01)

(52) Cooperative Patent Classification (CPC):
**H04W 72/1268**

(86) International application number:
**PCT/CN2023/110704**

(87) International publication number:
**WO 2025/025160 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **CAO, Jianfei**
  **Dongguan, Guangdong 523860 (CN)**
• **LIU, Zhe**
  **Dongguan, Guangdong 523860 (CN)**
• **CHEN, Wenhong**
  **Dongguan, Guangdong 523860 (CN)**

(74) Representative: **Penza, Giancarlo**
**Bugnion S.p.A.**
**Viale Lancetti, 17**
**20158 Milano (IT)**

(54) **COMMUNICATION METHOD AND APPARATUS, AND DEVICE, CHIP, STORAGE MEDIUM, PRODUCT AND PROGRAM**

(57) Disclosed in the present application are a communication method and apparatus, and a device, a chip, a storage medium, a product and a program. The method comprises: a network device sending first information to a terminal device, wherein the first information is used for indicating a first timing advance (TA) value, the first TA value is a TA value that is used within a first period of time, the first TA value is determined on the basis of a measurement parameter of an uplink signal and/or an uplink channel of the terminal device within a second period of time, and an end moment of the second period of time is earlier than a start moment of the first period of time.

```
Network                                          Terminal
device                                            device

  S110: sending first information, the first information being used to
  indicate a first timing advance (TA) value, the first TA value being a
  TA value used within a first time period, herein the first TA value is
  determined based on a measurement parameter of an uplink signal
  and/or an uplink channel of the terminal device within a second time
  period, and an end moment of the second time period is earlier than
  a start moment of the first time period
```

**FIG. 7**

**Description**

TECHNICAL FIELD

Embodiments of the present disclosure relate to the technical field of communication, and in particular to a communication method and apparatus, a device, a chip, a storage medium, a product, and a program.

BACKGROUND

In order to reduce the influence caused by the delay in spatial transmission of signaling between the terminal device and the network device (such as a base station), the terminal device may send a physical random access channel (PRACH) to the network device, so that the network device can measure the uplink delay based on the PRACH and determine the Timing Advance (TA) value of the terminal device. In this way, the terminal device can send an uplink channel or a uplink signal according to the TA value. However, the above-described process of obtaining the TA value requires a certain amount of uplink resource occupation and time overhead.

SUMMARY

Embodiments of the present disclosure provide a communication method and apparatus, a device, a chip, a storage medium, a product, and a program.
In a first aspect, an embodiment of the present disclosure provides a communication method, the method includes the following operation.
A network device sends first information to a terminal device, the first information being used to indicate a first timing advance (TA) value, the first TA value being a TA value used within a first time period. The first TA value is determined based on a measurement parameter of an uplink signal and/or an uplink channel of the terminal device within a second time period. An end moment of the second time period is earlier than a start moment of the first time period.
In a second aspect, an embodiment of the present disclosure provides a communication method, the method includes the following operation.
The terminal device determines a first timing advance (TA) value, the first TA value being a TA value used within a first time period. The first TA value is determined based on a measurement parameter of an uplink signal and/or an uplink channel of the terminal device within a second time period, and an end moment of the second time period is earlier than a start moment of the first time period.
In a third aspect, an embodiment of the present disclosure provides a communication apparatus, the communication apparatus includes a first sending unit.
The first sending unit is configured to send first information to a terminal device, the first information is used to indicate a first timing advance (TA) value, the first TA value being a TA value used within a first time period. The first TA value is determined based on a measurement parameter of an uplink signal and/or an uplink channel of the terminal device within a second time period, and an end moment of the second time period is earlier than a start moment of the first time period.
In a fourth aspect, an embodiment of the present disclosure provides a communication apparatus, the communication apparatus includes a second processing unit.
The second processing unit is configured to determine a first timing advance (TA) value, the first TA value being a TA value used within a first time period. The first TA value is determined based on a measurement parameter of an uplink signal and/or an uplink channel of the terminal device within a second time period, and an end moment of the second time period is earlier than a start moment of the first time period.
In a fifth aspect, an embodiment of the present disclosure provides a communication device including a processor and a memory. The memory is used to store a computer program, and the processor is used to call and run the computer program stored in the memory to execute the communication method of any one of the first and second aspects described above.
In a sixth aspect, an embodiment of the present disclosure provides a chip for implementing the communication method of any one of the first and second aspects described above.
Specifically, the chip includes a processor. The processor is used for calling and running a computer program in a memory, to cause a device on which the chip is mounted to execute the communication method of any one of the first and second aspects described above.
In a seventh aspect, an embodiment of the present disclosure provides a computer-readable storage medium having stored thereon a computer program. When executed by at least one processor, the computer program implements the communication method of any one of the first and second aspects described above.
In an eighth aspect, an embodiment of the present disclosure provides a computer program product including computer program instructions. The computer program instructions cause a computer to execute the communication method of any one of the first and second aspects described above.

In a ninth aspect, an embodiment of the present disclosure provides a computer program. When running on a computer, the computer program causes the computer to execute the communication method of any one of the first and second aspects described above.

Embodiments of the present disclosure provide a communication method and apparatus, a device, a chip, a storage medium, a product, and a program. The method may include that: a network device sends first information to a terminal device. The first information is used to indicate a first TA value, the first TA value being a TA value used in a first time period. The first TA value is determined based on a measurement parameter of an uplink signal and/or an uplink channel of the terminal device within a second time period, and an end moment of the second time period is earlier than a start moment of the first time period. That is to say, the first TA value to be used in the future/forthcoming time period can be determined according to the measurement parameter of the uplink signal and/or the uplink channel sent by the terminal device within the historical/past time period, so that the terminal device can obtain the TA value without sending the uplink signal and/or the uplink channel to the network device again, thereby saving the time-frequency resource and time overhead.

## BRIEF DESCRIPTION OF THE DRAWINGS

The accompanying drawings illustrated herein are used to provide further understanding of the present disclosure and constitute a part of the present disclosure, and illustrative embodiments of the present disclosure and their description are used to explain the present disclosure instead of constituting improper limitation to the present disclosure. In the accompanying drawings:

FIG. 1 illustrates a first schematic diagram of an adjustment format of a timing advance value;
FIG. 2 illustrates a second schematic diagram of an adjustment format of a timing advance value;
FIG. 3 illustrates a schematic diagram of a signaling indicating a timing advance value;
FIG. 4 illustrates a schematic diagram of a reference point of a timing advance value;
FIG. 5 illustrates a schematic diagram of a neuronal structure;
FIG. 6 illustrates a schematic diagram of a neural network;
FIG. 7 illustrates a first schematic flow diagram of a communication method according to an embodiment of the present disclosure;
FIG. 8 illustrates a second schematic flow diagram of a communication method according to an embodiment of the present disclosure;
FIG. 9 illustrates a third schematic flow diagram of a communication method according to an embodiment of the present disclosure;
FIG. 10 illustrates a first schematic diagram of a scenario in which a network device determines a first TA value;
FIG. 11 illustrates a schematic diagram of an input and output relationship of a second model;
FIG. 12 illustrates a fourth schematic flow diagram of a communication method according to an embodiment of the present disclosure;
FIG. 13 illustrates a second schematic diagram of a scenario in which a network device determines a first TA value;
FIG. 14 illustrates a schematic diagram of input and output relationships of a first model;
FIG. 15A illustrates a first schematic diagram of a TA command (TAC) structure according to an embodiment of the present disclosure;
FIG. 15B illustrates a second schematic diagram of a TAC structure according to an embodiment of the present disclosure;
FIG. 16A illustrates a third schematic diagram of a TAC structure according to an embodiment of the present disclosure;
FIG. 16B illustrates a fourth schematic diagram of a TAC structure according to an embodiment of the present disclosure;
FIG. 17A illustrates a fifth schematic diagram of a TAC structure according to an embodiment of the present disclosure;
FIG. 17B illustrates a sixth schematic diagram of a TAC structure according to an embodiment of the present disclosure;
FIG. 18A illustrates a seventh schematic diagram of a TAC structure according to an embodiment of the present disclosure;
FIG. 18B illustrates a eighth schematic diagram of a TAC structure according to an embodiment of the present disclosure;
FIG. 19A illustrates a ninth schematic diagram of a TAC structure according to an embodiment of the present disclosure;
FIG. 19B illustrates a tenth schematic diagram of a TAC structure according to an embodiment of the present disclosure;

FIG. 20 illustrates a fifth schematic flow diagram of a communication method according to an embodiment of the present disclosure;

FIG. 21 illustrates a first schematic diagram of a composition structure of a communication apparatus according to an embodiment of the present disclosure;

FIG. 22 illustrates a second schematic diagram of a composition structure of a communication apparatus according to an embodiment of the present disclosure;

FIG. 23 illustrates a schematic diagram of a structure of a communication device according to an embodiment of the present disclosure;

FIG. 24 illustrates a schematic diagram of a structure of a chip according to an embodiment of the present disclosure;

FIG. 25 illustrates a schematic block diagram of a communication system according to an embodiment of the present disclosure.

## DETAILED DESCRIPTION

Hereinafter, the technical solutions in the embodiments of the present disclosure will be described with reference to the accompanying drawings in the embodiments of the present disclosure, and it is apparent that the described embodiments are part of the embodiments of the present disclosure, but not all the embodiments. Based on the embodiments in the present disclosure, all other embodiments obtained by those skilled in the art without creative work fall within the scope of protection of the present disclosure.

Unless otherwise defined, all technical and scientific terms used herein have the same meaning as commonly understood by those skilled in the art to which this invention belongs. The terms used herein are for the purpose of describing embodiments of the present disclosure only and are not intended to limit the present disclosure.

In the following description, "some embodiments" describes a subset of all possible embodiments, but it can be understood that "some embodiments" may be the same subset or different subsets of all possible embodiments, and may be combined with each other without conflict.

It should also be noted that the terms "first\ second\ third" mentioned in the embodiments of the present disclosure are only used to distinguish similar objects, and do not represent a specific ordering for the objects, and it can be understood that a specific order or a priority order of "first\second\third" may be interchanged if allowed, so that the embodiments of the present disclosure described herein can be implemented in an order other than that illustrated or described herein.

In addition, the term "and/or" in the embodiments of the present disclosure is only an association relationship describing associated objects, and indicates that there may be three kinds of relationships. For example, A and/or B may indicate that A exists alone, A and B exist simultaneously, and B exists alone. In addition, the character "/" herein generally indicates that the associated objects are in an "or" relationship.

It should be understood that the "indicate" mentioned in the embodiments of the present disclosure may be a direct indication, an indirect indication, or may represent an associated relationship. For example, A indicates B, which may mean that A directly indicates B, for example, B can be acquired through A. It may also mean that A indirectly indicates B, for example, A indicates C, and B can be acquired through C. It may also mean that there is an associated relationship between A and B.

It should also be understood that the "predefined", "agreed by protocol", "predetermined", or "predefined rule" mentioned in the embodiments of the present disclosure may be implemented by pre-storing corresponding codes, tables in the device (for example, the terminal device), or in another manner that can be used to indicate relevant information, and the present disclosure does not limit the specific implementation manner thereof. For example, "predefined" may refer to defined in the protocol. It should also be understood that in the embodiments of the present disclosure, the "protocol" may refer to a standard protocol in the field of communication, and may include, for example, a Long Term Evolution (LTE) protocol, a New Radio (NR) protocol, and related protocols applied to a future communication system, which are not limited in the present disclosure.

The technical solutions described in the embodiments of the present disclosure may be arbitrarily combined as long as there is no conflict. In the description of the present disclosure, "multiple" means two or more unless otherwise explicitly and specifically defined.

The technical solutions of the embodiments of the present disclosure can be applied to various communication systems, such as an LTE system, an LTE Time Division Duplex (TDD), a Universal Mobile Telecommunication System (UMTS), an Internet of Things (IoT) system, a Narrow Band Internet of Things (NB-IoT) System, enhanced Machine-Type Communications (eMTC) system, 5G communication system (also referred to as NR communication system), or a future communication system, etc.

In embodiments of the present disclosure, the terminal device may be a device that provides voice/data to a user, for example, a handheld device having a wireless connection function, an in-vehicle device, or the like. At present, an example of terminal includes: an access terminal, a User Equipment (UE), a Mobile Phone, a tablet computer, a laptop computer, a handheld computer, a Mobile Internet Device (MID), a wearable device, a Virtual Reality (VR) device, an Augmented Reality (AR) device, an Industrial Control device, a wireless terminal in self-driving, a wireless terminal in Remote Medical Surgery, a wireless terminal in Smart Grid, a wireless terminal in Transportation Safety, a wireless terminal in Smart City, a wireless terminal in Smart Home, a cellular phone, a cordless phone, an Session Initiation Protocol (SIP) phone, a Wireless Local Loop (WLL) station, a Personal Digital Assistant (PDA), a handheld device or computing device with a wireless communication capability, or other processing devices connected to a wireless modem, a wearable device, a terminal device in a 5G network, or a terminal device in a future evolved Public Land Mobile Network (PLMN). The embodiments of the present disclosure are not limited thereto.

As an example and not limitation, in an embodiment of the present disclosure, the terminal device may also be a wearable device. A wearable device can also be called a wearable smart device, which is a general term for wearable devices that are developed by applying a wearable technology to intelligently design daily wear, such as glasses, gloves, watches, clothing and shoes. A wearable device is a portable device that is worn directly on the body or is integrated into the user's clothes or accessories. Wearable devices are not only hardware devices, but also realize powerful functions through software support, data interaction and cloud interaction. Generalized wearable smart devices have full functions, a large size, and can realize complete or partial functions without relying on smart phones, for example, smart watches or smart glasses, as well as those that only focus on a certain type of application functions and need to be used in conjunction with other devices (for example, smart phones), such as various smart bracelets and smart jewelry for physical sign monitoring.

In addition, in the embodiments of the present disclosure, the terminal device may also be a terminal device in an IoT system, and IoT is an important part of the future development of information technology, and its main technical feature is that articles are connected to the network through a communication technology, thereby realizing an intelligent network of human-machine interconnection and interconnection of things.

It should be pointed out that the terminal device and the network device (NW) can use some air interface technology (such as NR or LTE technology, etc.) to communicate with each other. The terminal devices may also use some air interface technology (such as NR or LTE technology, etc.) to communicate with each other.

It should be noted that the apparatus for realizing the function of the terminal device may be the terminal device, or may be an apparatus capable of supporting the terminal device to realize the function, for example, a chip system or a chip, and may be mounted in the terminal device. In the embodiments of the present disclosure, the chip system may be composed of a chip, or may include a chip and other discrete devices.

In the embodiments of the present disclosure, the network device may be an Evolutionary Node B (eNB or eNodeB) in an LTE system, a Next Generation Radio Access Network (NG RAN) device, a base station (gNB) in an NR system, or a radio controller in a Cloud Radio Access Network (CRAN), or the network device may be a relay station, an access point, an in-vehicle device, a wearable device, a hub, a switch, a bridge, a router, or a network device in a future evolution PLMN.

In order to facilitate understanding the technical solutions of the embodiments of the present disclosure, the related technologies of the embodiments of the present disclosure will be described below. The related technologies below can be arbitrarily combined with the technical solutions of the embodiments of the present disclosure as options, and all of them belong to the protection scope of the embodiments of the present disclosure.

In the current NR standard, a terminal device may be configured with up to four Timing Advance Groups (TAGs) in one Cell Group (CG). The Radio Resource Control (RRC) configuration of the TAG may be as follows.

Generally, one CG may include multiple Serving Cells, and each serving cell may be assigned a TAG Identifier (ID). Each TAG may have one timer (TimeAlignmentTimer), and the terminal device may time the timer. When the timer times out, the terminal device may consider that the TAG is out of synchronization in uplink. The network device may adjust the TA value through a Media Access Control (MAC) Control Element (CE) or another signaling during the running time of the timer, to reset the timer. At this time, the terminal device may consider that the TAG is in the uplink synchronization state.

Exemplarily, assuming that the value of the timer is configured to be 500 ms, if the network device updates (adjusts) the TA value once within 500 ms, the terminal device may consider that it is in the uplink synchronization state; otherwise, if the network device does not update (adjust) the TA value once within 500 ms, the terminal device may consider that it is out of uplink synchronization, and may initiate a Random Access Channel (RACH) procedure when the uplink data arrives.

The TA value refers to that using the first path of the downlink channel received by the terminal equipment (that is, the first symbol of the slot where the channel is located) as the downlink reference, and on this basis, advance transmission is performed. The TA value is calculated as follows:

$$TA = (N_{TA} + N_{TA,offset}) * T_C \qquad (1)$$

*is* a timing advance offset preconfigured for each serving cell in one CG; $T_C$ is the smallest time unit in the NR system, $T_C$ = 1/(4096 * 480kHz) ; $N_{TA}$ is the adjustment amount for TA.

$N_{TA}$ can be calculated in the following two manners.

The first calculation manner: differential adjustment can be provided through the MAC CE of the network device. That is to say, the present $N_{TA}$ adjustment ($N_{(TA_{new})}$) can be a forward or backward adjustment in time based on the last $N_{TA}$ adjustment ($N_{(TA_{old})}$). The calculation formula of the $N_{TA}$ adjustment is as follows:

$$N_{(TA_{new})} = N_{(TA_{old})} + (T_A - 31) * 16 * 64 * /2^{\mu} \qquad (2)$$

$\mu$ is the subcarrier spacing, and $T_A$ is the quantized TA value.

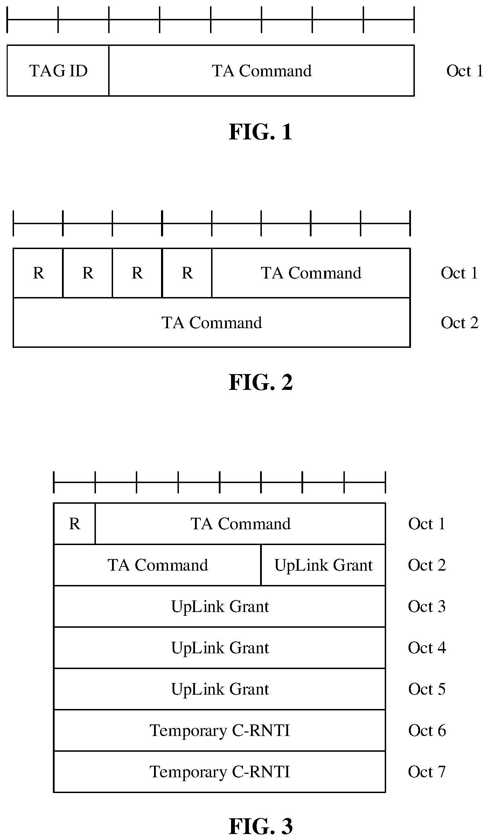

FIG. 1 illustrates a first schematic diagram of an adjustment format of a timing advance value. The differential adjustment format of the TA value of the MAC CE may be that the $T_A$ minimum time units are adjusted on the basis of the original TA, and the granularity of the TA adjustment is TAG. As illustrated in FIG. 1, the MAC CE is encoded in 8 bits (one Octet), where the TAG ID occupies 2 bits, and the TA command (that is, the timing advance command) occupies 6 bits. Oct 1 represents one octet, i.e., 8 bits.

The second calculation manner: the MAC CE of the network device directly provides an absolute value $N_{TA}$ , and its value range is 0 to 3846. The indication range for TA is $N_{TA} = T_A * 16 * 64 * 2^{\mu}$. At this time, the network device can indicate the absolute value of TA of the uplink transmission to the terminal device.

FIG. 2 illustrates a second schematic diagram of an adjustment format of a timing advance value. The TA command may be applied to a Primary Timing Advance Group (PTAG) corresponding to the MAC entity. At this time, since the MAC CE is only applicable to PTAG, it is not necessary to include the TAG ID. As illustrated in FIG. 2, the MAC CE is encoded in 8 bits (one Octet), where the TA command occupies 12 bits, Oct 1 represents one octet, Oct 2 represents one octet, that is, Oct 1 and Oct 2 each have 8 bits, and R represents setting to 0.

In addition, in the process of initially accessing the cell, after the terminal device sends the PRACH to the network device, the terminal device may expect the network device to send, within a certain time window, the TA value indication through the MAC Random Access Response (RAR).

FIG. 3 illustrates a schematic diagram of a signaling indicating a timing advance value. As illustrated in FIG. 3, in this signaling, the TA command occupies 12 bits, the UpLink Grant (UL Grant) occupies 27 bits, the Temporary Cell-Radio Network Temporary Identifier occupies 16 bits, each of Oct 1 to Oct 7 represents one octet, each of Oct 1 to Oct 7 represents 8 bits, and R represents setting to 0. In this way, the terminal device can obtain the initial TA absolute value, and the TA absolute value is 12 bits.

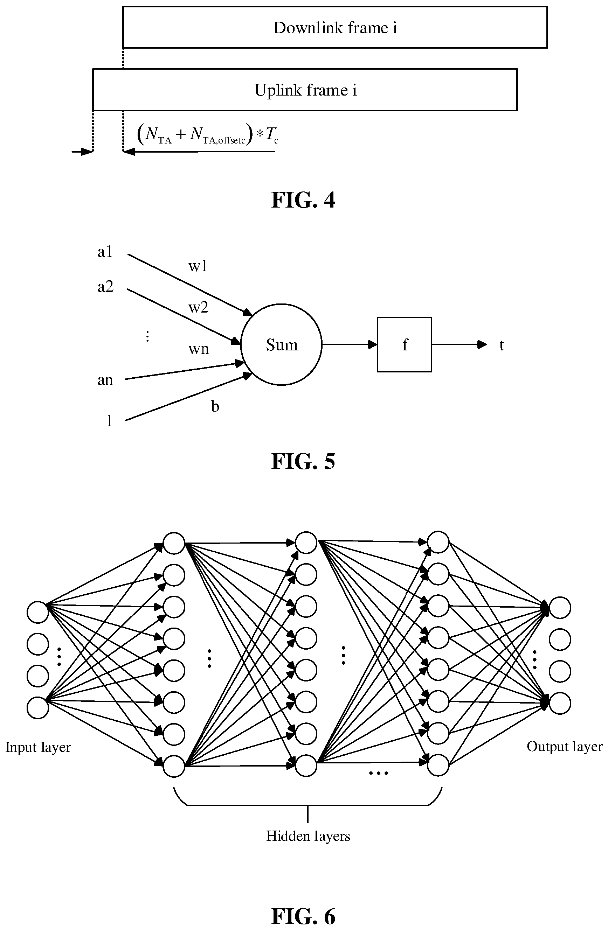

FIG. 4 illustrates a schematic diagram of a reference point of a timing advance value. As illustrated in FIG. 4, if the terminal device operates in a Single Transmission/Reception Point (STRP) mode, the reference point of the TA value of the terminal device starts from the reception time point of the downlink frame i, and the time point advanced by ($N_{TA} + N_{TA,offset}$) $*T_C$ forward is taken as the send time point of the uplink frame i, thereby sending the uplink channel or signal.

Embodiments of the present disclosure relate to a Neural Network (NN), which is briefly introduced below from three aspects: neuron structure, deep Neural Network, and acquisition of Neural Network models.

(1) Neuronal structure

NN is an operation model composed of multiple neuron nodes connected to each other, in which the connection between nodes represents the weighted value from the input signal to the output signal, which is called weight. Each node performs a weighted summation of different input signals, and outputs through a specific activation function. The neuron structure is illustrated in FIG. 5, where $a_1$, $a_2$, ..., $a_n$ and 1 are the inputs of the neuron, $w_1$, $w_2$, ..., $w_n$ and b represent the weights, Sum represents the summation function, f represents the activation function, and t is the output result.

(2) Deep neural network

FIG. 6 illustrates a simple neural network. The NN includes an input layer, a hidden layer and an output layer. Through different connection manners of multiple neurons, combined with different weights and activation functions, different outputs can be generated, and then the mapping relationship from input to output can be fitted. Exemplarily, each upper-level node may be connected to all of its lower-level nodes, forming a fully connected model. This fully connected model may also be referred to as a Deep Neural Network (DNN). In embodiments of the present disclosure, the NN model may be used to perform beam prediction in the spatial domain.

## (3) Acquisition of neural network model

An NN model can be obtained by training through the process of data set construction, training, verification and testing. In embodiments of the present disclosure, it is assumed that all NN models have been trained in advance by offline training and/or online training. It should be noted that offline training and online training are not mutually exclusive. For example, the network device can first obtain a static training result through offline training of the data set, and this process can be called offline training. In the process of using the NN model by the network device or the terminal device, as the terminal device further measures and/or reports, the NN model can continue to collect more data and perform real-time online training to optimize the parameters of the NN model, thereby achieving better inference and prediction results.

It should be noted that in the embodiment of the present disclosure, the output of the NN model can be understood as Inference or Prediction. It can be understood that inference and prediction in the embodiments of the present disclosure have the same meaning, and the two may be interchangeable.

In the embodiments of the present disclosure, the input of the NN model includes two measurement indicators: Channel Impulse Response (CIR) and Power Delay Profile (PDP), which are briefly described below, respectively.

(i) CIR: represents the time domain response of the signal in the transmission path. It reflects the phenomena of multipath propagation, delay spread and fading that may occur during signal transmission. When a sending signal passes through a wireless channel, it will go through multiple different paths, resulting in multiple copies of the signal with multiple arrival times and different amplitudes at the receiving end. CIR describes information such as arrival times, amplitudes, and phases of these replica signals.

CIR is usually expressed in the form of an impulse response function or a frequency response function. Among them, the impulse response function describes the response of the channel to the unit pulse input, while the frequency response function represents the response of the channel to different frequency signals. These functions can be obtained by measurement, simulation, or estimation techniques.

(ii) PDP: A spectral representation used to describe the power distribution of different delay components in a channel. It represents the amount of energy or power occupied by each delay component in the channel response. Typically, the PDP of a channel is obtained by channel measurement. In the measurement method, a specific test signal is transmitted in the channel and sampled, and then the PDP is obtained through the channel estimation algorithm.

The embodiments of the present disclosure also relate to a beam (pair), and the meaning of "beam (pair)" means a beam or a pair of beams. Specifically, in the embodiments of the present disclosure, a beam may refer to a transmit beam or a receive beam, and a beam pair may refer to a pair of transmit beam and receive beam. In the protocol, a "spatial filter" may be used instead of a "beam".

In the current NR protocol (from R15 to R17), for the initial access stage, the terminal device can send PRACH to the network device, and obtain the TA value through the MAC RAR or MAC CE fed back by the network device, so as to realize uplink synchronization with the serving cell. However, the above-described process of obtaining the TA value requires a certain amount of uplink resource (such as PRACH time-frequency resource or Preamble code time-frequency resource) occupation and time overhead (such as the first-step PRACH process and the second-step RAR RACH process).

Further, in the mobility enhancement in R18 of NR, although it has been agreed that the TA value of the target cell is obtained by measuring the downlink time difference (the time difference between the target cell and the serving cell that has been uplink synchronized), it is still necessary to use a specific serving cell that has been uplink synchronized as a reference, and multiple cells are required to use a synchronized timeline in the uplink. Therefore, although this manner of obtaining TA eliminates the need for PRACH transmission, the required conditions are relatively stringent.

Based on this, an embodiment of the present disclosure provides a communication method. In the communication method, the first TA value to be used in the future/forthcoming time period can be determined according to the measurement parameter of the uplink signal and/or the uplink channel sent by the terminal device within the historical/past time period, so that the terminal device can obtain the TA value without sending the uplink signal and/or the uplink channel to the network device again, thereby saving the time-frequency resource and time overhead.

In order to facilitate understanding the technical solutions of the embodiments of the present disclosure, the technical solutions of the present disclosure will be described in detail below with reference to specific embodiments. As an optional solution, the above related technologies can be arbitrarily combined with the technical solutions of the embodiments of the present disclosure, and all of them belong to the protection scope of the embodiments of the present disclosure. Embodiments of the present disclosure include at least some of the following.

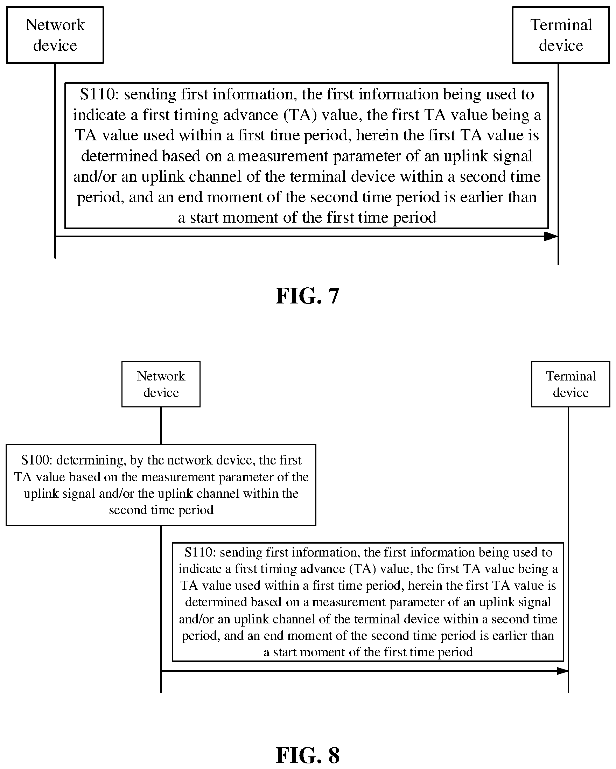

FIG. 7 illustrates a first schematic flow diagram of a communication method according to an embodiment of the present disclosure. As illustrated in FIG. 7, the method includes operation S110.

In S110, a network device sends a first information to a terminal device. The first information is used to indicate a first TA value, the first TA value being a TA value used in a first time period. The first TA value is determined based on a measurement parameter of an uplink signal and/or an uplink channel of the terminal device within a second time period, and an end moment of the second time period is earlier than a start moment of the first time period.

Accordingly, the terminal device may receive the first information sent by the network device.

It should be noted that the second time period can be understood as a historical/past time period. The first time period may be understood as a future/forthcoming time period.

It can be understood that the network device may acquire the measurement parameter of the uplink signal and/or the uplink channel sent by the terminal device within the second time period. If the current network device is not the network device corresponding to the cell in which the terminal device resides within the second time period, the current network device may acquire the measurement parameter of the uplink signal and/or the uplink channel sent by the terminal device within the second time period, from the network device in which the terminal device resides in the history. If the current network device is a network device corresponding to the cell in which the terminal device resides within the second time period, the network device may directly acquire the measurement parameter of the uplink signal and/or the uplink channel of the terminal device received within the second time period.

In some embodiments, the uplink signal and/or uplink channel may include a PRACH, and/or a Sounding Reference Signal (SRS). Alternatively, the uplink signal may include an SRS, and the uplink channel may include a PRACH.

It should be noted that the network device may configure an SRS resource set for the terminal device, and each SRS resource set may include one or more SRS resources. Each SRS resource may correspond to a piece of spatial relationship information, such as index information of a spatial filter. When the SRS resource corresponds to the spatial relationship information, the SRS resource can be used at the high frequency Frequency Range 2 (FR2).

It can be understood that in the embodiment of the present disclosure, TA prediction at the cell level may be completed for PRACH, and TA prediction at the cell level and/or spatial filter level may be completed for SRS.

In some embodiments, the measurement parameter of the uplink signal and/or uplink channel may include, but are not limited to, one or more of: a Reference Signal Receiving Power (RSRP) of the uplink signal and/or uplink channel, or a Time of Arrive (ToA) of the uplink signal and/or uplink channel, or the like. Exemplarily, when the uplink signal and/or uplink channel includes an SRS, the measurement parameter may be an SRS-RSRP, and/or a ToA of the SRS.

In the embodiment of the present disclosure, the network device may determine a TA value used by the terminal device within the first time period (it is denoted as the first TA value in the embodiment of the present disclosure) based on the measurement parameter of the uplink signal and/or uplink channel within the second time period . That is, the network device may predict the TA value within the future/future time period according to the measurement parameter of the uplink signal and/or uplink channel sent by the terminal device within the historical/past time period (or referred to as the historical measurement parameter).

In the embodiment of the present disclosure, the measurement parameter of the uplink signal and/or uplink channel within the second time period may be referred to as the historical measurement parameter, and both are equivalent or replaceable.

It can be understood that after obtaining the first TA value, the network device may indicate the first TA value to the terminal device through the first information. Accordingly, the terminal device may directly communicate with the network device by using the first TA value indicated by the first information, without sending the uplink signal and/or the uplink channel to the network device within the first time period.

Thus, in the communication method provided by the embodiment of the present disclosure, the network device may determine a first TA value to be used by the terminal device in the future according to the historical measurement parameter of the uplink signal and/or the uplink channel of the terminal device, and notify the terminal device of the first TA value. In this way, the terminal device can obtain the TA value without sending the uplink signal and/or uplink channel to the network device again, thereby saving the time-frequency resource and time overhead.

It should be noted that the first information indicating the first TA value may be an explicit indication. Exemplarily, the first information may include a specific value of the first TA value, a difference value between the first TA value and a reference TA value, or an index value of the first TA value in a TA value candidate set, or the like. The embodiment of the present disclosure does not limit this. Further, the first information indicating the first TA value may be an implicit indication. Exemplarily, the first information may implicitly indicate the first TA value by the value of the other information. The embodiment of the present disclosure does not limit the manner in which the first information indicates the first TA value.

It should also be noted that the first time period and/or the second time period may be determined by one or more of: a start moment, an end moment, or a duration. Here, one or more of the start moment, the end moment, or the duration of the first time period and/or the second time period may be predefined, may be determined according to a preset rule, or may be preconfigured by the network device. The embodiment of the present disclosure does not limit this.

The start moment and the end moment may be a certain time domain symbol or a certain absolute time, and the embodiment of the present disclosure does not limit this. In addition, the unit of duration may be a relative time unit, such as a time domain symbol, a slot, a subframe, or the like. The unit of the duration may be an absolute time unit, such as microseconds (us), milliseconds (ms), seconds (s), or the like. The embodiment of the present disclosure does not limit this.

Exemplarily, a first time period and/or a second time period may be predefined. The second time period may be a time period lasting N (N > = 1) time domain symbols with the first time domain symbol of slot 1 as a start moment. The first time period may be a time period lasting N (N > = 1) time domain symbols with the first time domain symbol of slot 1 + N as a start moment. Alternatively, the second time period may be a time period lasting M (M > 0) milliseconds with the first time domain symbol of slot n as a start moment. The first time period may be a time period lasting M (M > 0) milliseconds with the first time domain symbol of slot 1 + n as a start moment.

In some embodiments, the first time period and/or the second time period may be represented by using a time point (which may be a start moment or an end moment). Exemplarily, the network device may predict TA values (TA # 1 to TA # F) at F (F > = 1) moments in the future according to the historical measurement parameter of the uplink signal and/or uplink channel of the terminal device. From the first moment, the terminal device may communicate with the network device by using TA # 1; from the second moment, the terminal device may communicate with the network device by using TA # 2; analogously, from the F-th moment, the terminal device communicates with the network device by using TA # F. The embodiment of the present disclosure does not limit the specific implementations of the first time period and the second time period.

It should also be noted that when the terminal device sends the uplink signal and/or the uplink channel, it needs to be associated with a special downlink signal (referred to as a first downlink signal here in the embodiment of the present disclosure). The first downlink signal may be used by the terminal device to perform beamforming on the uplink signal and/or the uplink channel. That is, the terminal device may determine the spatial relationship information for sending the uplink signal and/or uplink channel based on the spatial relationship information of the first downlink signal. In short, the terminal device may determine, based on receiving the downlink beam of the first downlink signal, an uplink beam on which the terminal device sends the uplink signal and/or the uplink channel.

In some embodiments, the first downlink signal may include one or more of the following:

a downlink signal selected by the terminal device based on a downlink measurement;
a downlink signal configured by the network device; or
a dedicated downlink signal for determining first TA value.

It should be noted that the downlink signal includes, but is not limited to, a Synchronization Signal and PBCH Block (SSB) and/or a Channel State Information-Reference Signal (CSI-RS).

As can be understood, the network device performs beam sweeping to send a downlink signal, to cover the service range of the entire cell. Beam sweeping refers to sending a downlink signal by using beams in different directions at different moments.

In a possible implementation, the terminal device may measure the received downlink signal, and select the first downlink signal based on the downlink measurement result.

Exemplarily, the first downlink signal may be an SSB selected by the terminal device from the SSB burst set by measuring the SSB in the random access procedure.

Exemplarily, the first downlink signal may be a CSI-RS selected by the terminal device according to the measurement result of the CSI-RS after the terminal device measures the CSI-RS.

In another possible implementation, the network device may directly configure the first downlink signal associated with the uplink signal and/or uplink channel for the terminal device.

Exemplarily, the first downlink signal may be an SSB configured in advance by the network device, or may be an SSB indicated by a PDCCH order.

Exemplarily, the first downlink signal may be spatial relationship information configured and/or activated by the network device for an SRS resource, for example, an uplink or joint transmission configuration indication state (UL/joint TCI state).

In yet another possible implementation, the first downlink signal may be a dedicated reference signal used for TA prediction. Exemplarily, the first downlink signal may be a CSI-RS for mobility.

In some embodiments, a sending time of the uplink signal and/or the uplink channel is determined based on a third TA value and a reception time of a first downlink signal associated with the uplink signal and/or the uplink channel, or the sending time of the uplink signal and/or the uplink channel is determined based on the reception time of the first downlink signal. The third TA value is a TA value used by the terminal device when sending the uplink signal and/or the uplink channel.

It can be understood that the time at which the terminal device sends the uplink signal and/or the uplink channel to the network device may be related to the reception time of the first downlink signal associated with the uplink signal and/or the uplink channel. Alternatively, the terminal device may send the uplink signal and/or the uplink channel to the network device based on the reception time of the first downlink signal.

In a possible implementation, the sending time of the uplink signal and/or the uplink channel may be directly based on the reception time of the first downlink signal associated with the uplink signal and/or the uplink channel. It can be understood that the terminal device may take the reception time of the first downlink signal as a starting time point for sending the uplink signal and/or the uplink channel. That is, the TA value of the terminal device sending the uplink signal and/or the uplink channel is zero, and the time at which the terminal device sends the uplink signal and/or the uplink channel may not be adjusted by the TA.

In another possible implementation, the sending time of the uplink signal and/or the uplink channel may be directly based on the third TA value and the reception time of the first downlink signal associated with the uplink signal and/or the uplink channel. It can be understood that the terminal device may use the third TA value to adjust the sending time of the uplink signal and/or the uplink channel.

Exemplarily, when the uplink signal and/or the uplink channel is PRACH, the terminal device may use the downlink reception time of the SSB as the starting time point for sending the PRACH, that is, the TA value of the PRACH is zero.

Exemplarily, when the uplink signal and/or the uplink channel is an SRS, the terminal device may adjust the sending time of the SRS by using the third TA value. The third TA value may be a TA value of the TAG where the terminal device is located. Further, the terminal device may send the SRS with reference to the downlink reception time of the SSB, that is, send the SRS that is not adjusted by the third TA.

It should be noted that when the network device configures the SRS resource set for the terminal device, the purpose of the SRS resource set may be configured. For example, the SRS resource set may be configured for beam management.

In some embodiments, the network device may configure that the purpose of the SRS resource set is "TA prediction". That is, one or more SRS resources in the SRS resource set may be used to determine TA values to be used in a future time period.

In the embodiment of the present disclosure, when the SRS is used for "TA prediction", the time at which the terminal device sends the SRS may not be adjusted by the third TA value. When the SRS is not used for "TA prediction", the terminal device adjusts the sending time of the SRS by using the third TA value.

In some embodiments, the measurement parameter (alternatively referred to as historical measurement parameter) of the uplink signal and/or the uplink channel in S110 may include one or more parameters. In addition, the number of first TA values may include one or more. That is, the network device may determine one or more future first TA values according to one or more historical measurement parameters of the uplink signal and/or the uplink channel of the terminal device.

It can be understood that the network device may acquire the measurement parameter of the uplink signal and/or the uplink channel within one or more second time periods. The measurement parameter of the uplink signal and/or the uplink channel within each second time period may be used by the network device to determine a second TA value (i.e. a historical TA value) used by the terminal device within the each second time period.

It should be noted that the network device may acquire the measurement parameter of the uplink signal and/or the uplink channel of the terminal device within each second time period, from a network device corresponding to the cell in which the terminal device resides within the second time period. If the network device corresponding to the cell in which the terminal device resides within a certain second time period is the current network device, the network device may directly acquire the measurement parameter of the uplink signal and/or the uplink channel sent by the terminal device within the second time period.

In some embodiments, when there are multiple first TA values, the multiple first TA values may correspond to multiple first time periods, and the start moments of the multiple first time periods are different. Accordingly, within a first time period corresponding to each first TA value, the terminal device may use the first TA value to communicate with the network device. Each of the multiple first TA values may correspond to one first time period. In different first time periods, the first TA values used by the terminal device may be different.

Exemplarily, multiple first TA values may correspond to respective slots, and in each slot, the terminal device may use the first TA value corresponding to the slot. That is, the multiple first time periods may be multiple consecutive slots.

Exemplarily, multiple first TA values may correspond to multiple time intervals, and starting from having received the first information, the terminal device may use the first TA value corresponding to the time interval every M milliseconds.

Based on S110, the network device sends a first TA value to the terminal device, and the first TA value is determined by the network device based on the measurement parameter of the uplink signal and/or the uplink channel of the terminal device within the second time period. That is, in the communication method provided by the embodiment of the present disclosure, the network device may further execute S100 before S110. Referring to FIG. 8, in S100, the network device determines the first TA value based on the measurement parameter of the uplink signal and/or the uplink channel within the second time period.

In a possible implementation, the network device may determine the first TA value directly based on the measurement parameter of the uplink signal and/or the uplink channel within the second time period. In another possible implementation, the network device may determine the second TA value based on the measurement parameter of the uplink signal and/or the uplink channel within the second time period, and then determines the first TA value based on the second TA value. It should be noted that the network device may determine the first TA value by an AI/ML model deployed on the network device side.

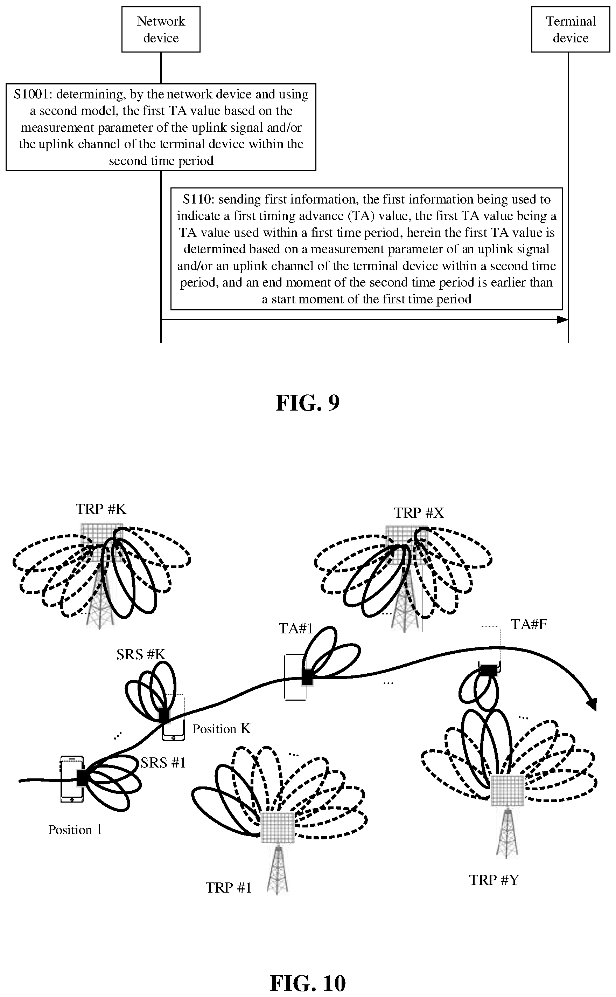

Hereinafter, with reference to FIGS. 9 to 14, respectively, a detailed flow of determining the first TA value by the network device will be described by means of Manner # A and Manner # B.

Manner # A: The network device directly determines the first TA value based on the measurement parameter of the uplink signal and/or the uplink channel within the second time period.

FIG. 9 illustrates a third schematic flow diagram of a communication method according to an embodiment of the present disclosure. As illustrated in FIG. 9, the method may include the following operations.

In S1001, the network device determines, by using the second model, the first TA value based on the measurement parameter of the uplink signal and/or the uplink channel of the terminal device within the second time period.

The second model may be a second neural network model.

Exemplarily, the second neural network model may be a Recurrent Neural Network (RNN) model, a Long Short Term Memory (LSTM) model, or the like, and the embodiments of the present disclosure are not limited thereto.

Exemplarily, the second neural network model may be trained and obtained by the terminal device through the process of data set construction, training, verification, and testing.

Exemplarily, the second neural network model may be trained and obtained by the terminal device in advance through offline training and/or online training.

Exemplarily, the second neural network model may be an Artificial Intelligence (AI) model or a Machine Learning (ML) model.

It can be understood that the network device may input the measurement parameter of the uplink signal and/or the uplink channel within the second time period into the second model, and obtain the first TA value through processing in the second model. Specifically, the network device may input the measurement parameter of the uplink signal and/or the uplink channel within one or more second time periods into the second model, and obtain one or more first TA values through processing in the second model.

Exemplarily, the terminal device may pass through different cells and/or different beam coverage during movement. The terminal device may send the SRS to the network device under different cells and/or different beam coverage, to obtain the TA value under each cell and/or beam coverage. FIG. 10 illustrates a first schematic diagram of a scenario in which a network device determines a first TA value. As illustrated in FIG. 10, the terminal device sends SRS # 1 to TRP 1 at position 1, the terminal device sends SRS # 2 to TRP 2 at position 2, and so on, the terminal device sends SRS # K to TRP # K at position K. Here, the network device may acquire the measurement parameters of the SRS sent by the terminal device in K (K > = 1) historical time periods (for example, K historical slots). In this example, the measurement parameters of the SRS in the K historical time periods may include the measurement parameter of SRS # 1 to the measurement parameter of SRS # K. The network device may input the measurement parameter of the SRS # 1 to the measurement parameter of the SRS # K into the second model, and obtain the first TA value (i.e., TA # 1 to TA # F) used in F future time periods (for example, F slots in the future). In the future slot # 1, TA # 1 is used to communicate with the network device until it is switched to TA # 2 in the future slot # 2 to communicate with the network device, and so on, TA # F is used to communicate with the network device in the future slot # F.

In a possible implementation, the second model may be trained and obtained according to the measurement parameter of the uplink signal and/or the uplink channel of the terminal device within the third time period in the actual scenario, and the TA value within the fourth time period in the actual scenario (the TA value may be calculated by using a traditional algorithm according to the measurement parameter of the uplink signal and/or the uplink channel sent by the terminal device within the fourth time period). The end moment of the third time period is earlier than the end moment of the fourth time period. As such, the second model may predict one or more first TA values according to the input one or more historical measurement parameters of the uplink signal and/or uplink channel. That is, the input information of the second model may include only one or more historical measurement parameters of the uplink signal and/or uplink channel.

In another possible implementation, in order to improve the prediction accuracy of the second model, the second model can be trained and obtained according to the measurement parameter of the uplink signal and/or the uplink channel of the terminal device within the third time period in the actual scenario, the TA value within the fourth time period in the actual scenario (the TA value may be calculated by using a traditional algorithm according to the measurement parameter of the uplink signal and/or the uplink channel sent by the terminal device within the fourth time period), and the index information of the cell associated with each measurement parameter, and/or the index information of the spatial filter associated with each measurement parameter. Thus, in addition to the measurement parameter of the uplink signal and/or the uplink channel within one or more second time periods, the input information of the second model may include: index information of the cell associated with each measurement parameter, and/or index information of the spatial filter associated with each measurement parameter. That is, the second model predicts one or more first TA values according to the input one or more historical measurement parameters of the uplink signal and/or uplink channel, and the index information of the cell associated with each historical measurement parameter, and/or the index information of the spatial filter associated with each measurement parameter. The prediction accuracy of the second model is improved.

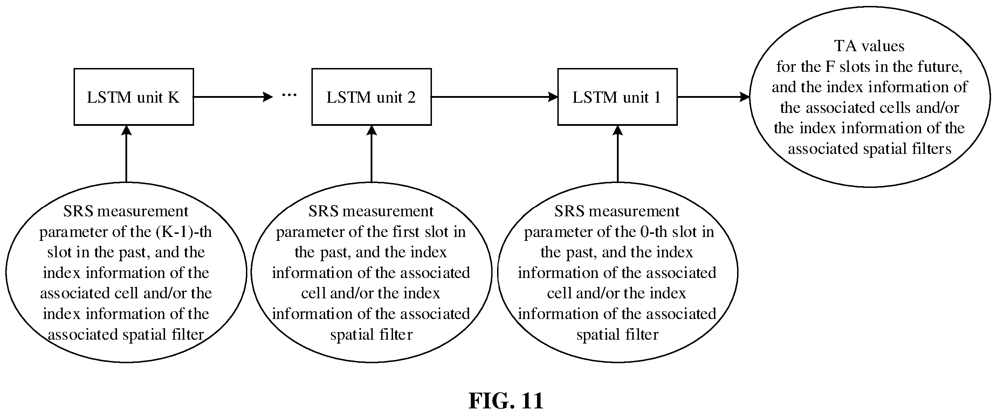

Exemplarily, the second model may include multiple LSTM units, and each LSTM unit may be input with measurement parameters in the past K slots, and index information of cells associated with the measurement parameters, and/or index information of spatial filters associated with the measurement parameters. FIG. 11 illustrates a schematic diagram of an input and output relationship of a second model. Referring to FIG. 11, the second model may be input with measurement parameters of SRS sent by terminal devices in the past K slots. The LSTM unit 1 may be input with the SRS measurement parameter of the past 0th slot, index information of the associated cell, and/or index information of the associated spatial filter. The LSTM unit 2 may be input with the SRS measurement parameter of the past first slot, index information of the associated cell, and/or index information of the associated spatial filter. By analogy, the LSTM unit K may be input with the SRS measurement parameter of the past (K-1)-th slot, and index information of the associated cell, and/or index information of the associated spatial filter. The output of the second model may be a TA value used for the future F slots, and index information of the cell associated with the TA value and/or index information of the associated spatial filter.

In some embodiments, the index information of the cell may be a Physical Cell Identifier (PCI), a PCI index value (PCI index), or a configuration index of a candidate cell.

It should be noted that the PCI index may refer to that multiple PCIs are encoded, and each PCI corresponds to one PCI index, so as to avoid potential risk of exposing network device configuration information. Exemplarily, eight 10-bit real PCIs may be encoded into a 3-bit PCI index.

It also should be noted that, in the mobility enhancement, since multiple candidate cells need to be configured in advance by RRC parameters, the configuration index of a candidate cell may also be used as an identifier or an index of a cell.

In some embodiments, the output information of the second model may include one or more first TA values. Further, the output information of the second model may further include index information of the first cell associated with each first TA value, and/or index information of the first spatial filter associated with each first TA value.

It can be seen that, through the second model, the network device processes the input one or more historical measurement parameters of the uplink signal and/or uplink channel, and predicts one or more first TA values for a future time period. In this way, the terminal device does not need to send the uplink signal and/or the uplink channel to the network device in the future, and accordingly, the network device can obtain the first TA value without measuring the uplink signal and/or the uplink channel in the future, thereby saving time-frequency resources and time overhead.

Manner # B: The network device may determine the first TA value based on the second TA value, which is determined according to the measurement parameter of the uplink signal and/or the uplink channel within the second time period.

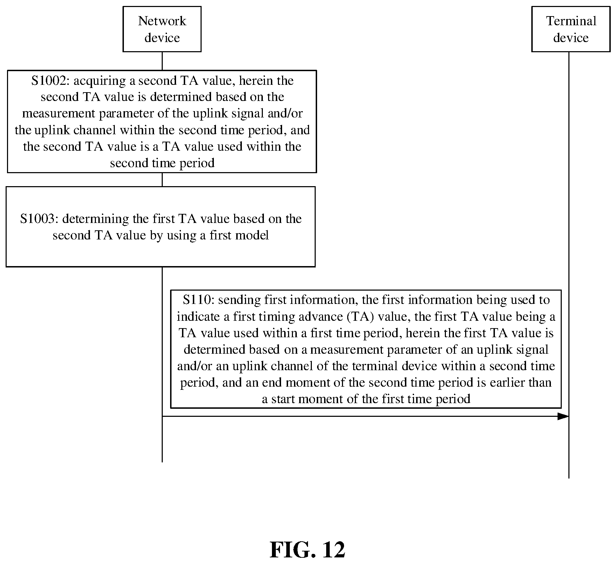

FIG. 12 illustrates a fourth schematic flow diagram of a communication method according to an embodiment of the present disclosure. As illustrated in FIG. 12, the method may include the following operations.

In S1002, the network device acquires a second TA value. The second TA value is determined based on the measurement parameters of the uplink signal and/or the uplink channel within the second time period. The second TA value is a TA value used within the second time period.

In S1003, the network device determines the first TA value based on the second TA value by using the first model.

It can be understood that the second TA value may be determined by the network device based on the measurement parameter of the uplink signal and/or the uplink channel of the terminal device within the second time period. In practical applications, the network device may determine a TA value for the terminal device according to an uplink signal and/or an uplink channel sent by the terminal device, and may indicate the corresponding TA value to the terminal device through a TA command. That is, in a historical time period, the network device has determined a corresponding historical TA value (i.e., a second TA value) according to the measurement parameter of the uplink signal and/or the uplink channel sent by the terminal device.

Based on this, the network device may acquire the second TA value, input the second TA value into the first model, and predict and obtain the first TA value through processing in the first model.

The first model may be a first neural network model.

Exemplarily, the first neural network model may be an RNN model, an LSTM model, or the like, and the embodiments of the present disclosure are not limited thereto.

Exemplarily, the first neural network model may be trained and obtained by the terminal device through the process of data set construction, training, verification, and testing.

Exemplarily, the first neural network model may be trained and obtained by the terminal device in advance through offline training and/or online training.

Exemplarily, the first neural network model may be an AI model or an ML model.

It should be noted that the number of the second TA values may include one or more. That is, the network device may input one or more second TA values into the second model, and obtain one or more first TA values through processing in the second model.

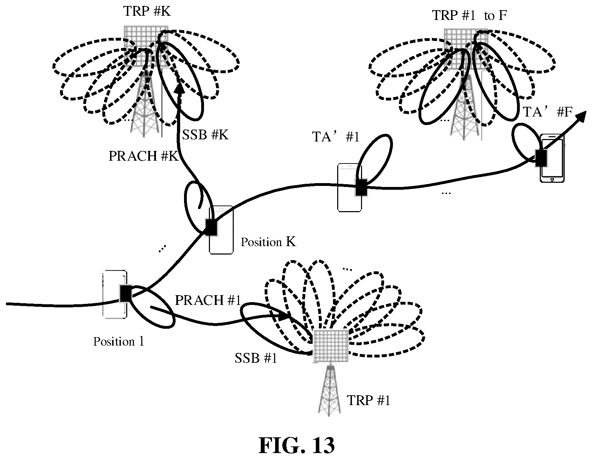

Exemplarily, FIG. 13 illustrates a second schematic diagram of a scenario in which a network device determines a first TA value. As illustrated in FIG. 13, the terminal device sends PRACH # 1 to TRP 1 at position 1, and TRP 1 performs TA estimation and indicates TA # 1 to the terminal device. The terminal device sends PRACH # 2 to TRP 2 at position 2, and TRP2 performs TA estimation and indicates TA # 2 to the terminal device. By analogy, when the terminal device is at position K, it may send PRACH # K to TRP # K, and TRP # K performs TA estimation and indicates TA # K to the terminal device. The network device may acquire TA values of the terminal device within K (K > = 1) historical time periods (e.g., K historical slots). In this example, TA values in K historical time periods may include TA # 1 to TA # K described above. The network device may input TA # 1 to TA # K into the first model to obtain the first TA values (i.e. TA'#1 to TA'#F) used in F future time period (for example, F future slots). TA'#1 is used to communicate with the network device in future slot # 1, until it is switched to TA'#2 in future slot # 2 to communicate with the network device, and so on, TA'#F is used to communicate with the network device in future slot # F.

In a possible implementation, the first model may be trained and obtained by taking a TA value of the terminal device within the third time period in the actual scene as an input, and a TA value within the fourth time period in the actual scene (the TA value may be calculated, by using a traditional algorithm, according to the measurement parameter of the uplink signal and/or uplink channel sent by the terminal device within the fourth time period) as an output. The end moment of the third time period is earlier than the end moment of the fourth time period. As such, the first model may predict one or more first TA values according to the input one or more historical second TA values. That is, the input information of the first model may include only one or more second TA values.

In another possible implementation, in order to improve the prediction accuracy of the first model, the first model may be trained and obtained by taking the historical TA values of the terminal device within the third time period in the actual scene, and the index signal of the cell associated with each historical TA value and/or the index information of the associated spatial filter as inputs, and taking the TA value within the fourth time period in the actual scene (the TA value may be calculated, by using a traditional algorithm, according to the measurement parameter of the uplink signal and/or uplink channel sent by the terminal device within the fourth time period) as an output. In this way, in addition to one or more historical second TA values, the input information of the first model may include: index information of the cell associated with each historical second TA value, and/or index information of the associated spatial filter. That is, the first model predicts one or more first TA values according to the input one or more second TA values, and the index information of the cell associated with each second TA value, and/or the index information of the associated spatial filter. Thus, the prediction accuracy of the first model is improved.

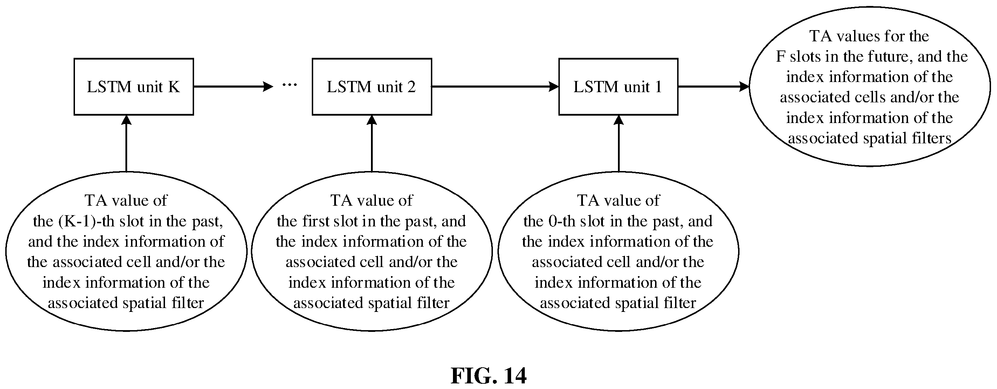

Exemplarily, the first model may include multiple LSTM units, and each LSTM unit may be input with historical TA values in the past K slots, and index information of cells associated with the historical TA values, and/or index information of spatial filters associated with the historical TA values. FIG. 14 illustrates a schematic diagram of an input and output relationship of the first model. Referring to FIG. 14, the first model may be input with the TA values of the terminal devices within the past K slots. The LSTM unit 1 may be input with the TA value of the past 0th slot, index information of the associated cell, and/or index information of the associated spatial filter. The LSTM unit 2 may be input with the TA value of the past first slot, index information of the associated cell, and/or index information of the associated spatial filter. By analogy, the LSTM unit K may be input with the TA value of the past (K-1)-th slot, and index information of the associated cell, and/or index information of the associated spatial filter. The output of the first model may be a TA value used for the future F slots, and index information of the cell associated with the TA value and/or index information of the associated spatial filter.

In some embodiments, the index information of the cell may be a PCI, a PCI index, or a configuration index of a candidate cell.

It should be noted that the PCI index may refer to that multiple PCIs are encoded, and each PCI corresponds to one PCI index, so as to avoid potential risk of exposing network device configuration information. Exemplarily, eight 10-bit real PCIs may be encoded into a 3-bit PCI index.

It also should be noted that, in the mobility enhancement, since multiple candidate cells need to be configured in advance by RRC parameters, the configuration index of a candidate cell may also be used as an identifier or an index of a cell.

In some embodiments, the output information of the first model may include one or more first TA values. Further, the output information of the first model may further include index information of the first cell associated with each first TA value, and/or index information of the first spatial filter associated with each first TA value.

It can be seen that, through the first model, the network device processes the input one or more historical TA values, and predicts one or more first TA values for a future time period. In this way, the terminal device does not need to send the uplink signal and/or the uplink channel to the network device in the future, and accordingly, the network device can obtain the first TA value without measuring the uplink signal and/or the uplink channel in the future, thereby saving time-frequency resources and time overhead.

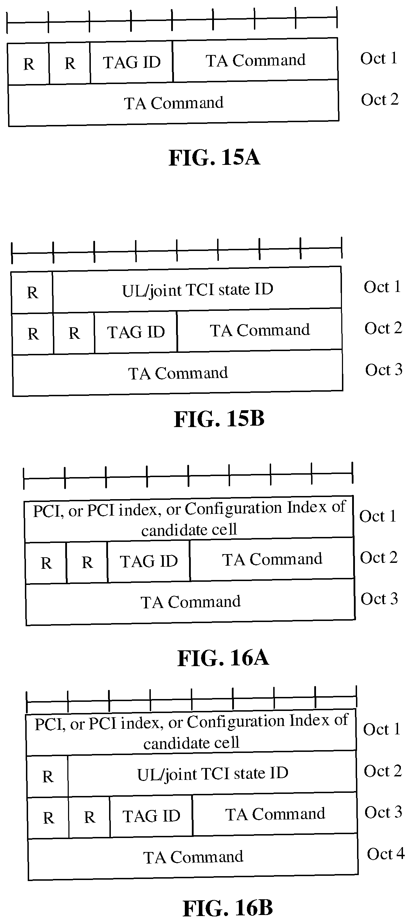

In an embodiment of the present disclosure, based on S110, the network device sends the first information to the terminal device, and indicates the first TA value to the terminal device through the first information. When there are multiple first TA values, in a possible implementation, the network device may sequentially indicate the multiple first TA values to the terminal device by using multiple TA Commands (TACs). In another possible implementation, the network device may use the TAC once to indicate all the first TA values to the terminal device. Hereinafter, with reference to FIGS. 15 to 19, respectively, a detailed flow of indicating the first TA value by the network to the terminal device will be described by means of Manner # A and Manner # B.

Mode # A: The network device sequentially indicates one or more first TA values to the terminal device by using multiple TA commands.

In an embodiment of the present disclosure, the operation S110 that the network device sends the first information to the terminal device may be implemented in the following manner.

at each of multiple first moments, a first TA value associated with the each first moment is sent to a terminal device. A first moment associated with each first TA value is earlier than a start moment of a first time period corresponding to the first TA value.

Accordingly, the terminal device may receive the first information in the following manner.

The terminal device receives, at each of multiple first moments, a first TA value associated with the each first moment. A first moment associated with each first TA value is earlier than a start moment of a first time period corresponding to the first TA value.

It can be understood that the network device may indicate, through a TA command, the first TA value corresponding to the upcoming first time period to the terminal device before the start moment of each first time period arrives.

That is, in each TAC sent by the network device, only the first TA value for the upcoming next first time period may be included. Accordingly, according to each received TAC, the terminal device may switch the TA value to the first TA value indicated by the TAC in an upcoming first time period, to communicate with the network device.

It should be noted that the time interval between the first moment associated with each first TA value and the start moment of the first time period corresponding to the first TA value may be predefined, or may be agreed between the network device and the terminal device, and the embodiment of the present disclosure does not limit this. For example, a time interval between a first moment associated with each first TA value and a start moment of a first time period corresponding to the first TA value may be N (N > = 1) time domain symbols.

Exemplarily, referring to a first TAC structure diagram illustrated in FIG. 15A, the TAC is two Octets (Oct) in length. Oct 1 may include a reserved bit R with 2 bits and a TAG ID with 2 bits. The remaining bits of Oct1 and the 8 bits of Oct2 may be a timing advance command that carries the first TA value of the next upcoming first time period. It should be noted that the TAG ID is a TAG index to which a cell index (for example, a PCI, a PCI index, or a configuration index of a candidate cell) corresponding to a predicted TA value belongs.

In some embodiments, if the network device perform a prediction in a beam level, for example, the network device predicts the TA value for a future time period based on the historical measurement parameter of the SRS, the TAC may also indicate the index information of the spatial filter associated with the TA value, for indicating a finer granularity.

Exemplarily, referring to a second TAC structure diagram illustrated in FIG. 15B, the TAC is 3 Octets (Oct) in length. Oct1 may include a reserved bit R with 1 bit, and the remaining 7 bits are UL/joint TCI state ID, which is used to carry index information of the spatial filter associated with the first TA value of the next upcoming first time period. Oct2 and Oct3 in FIG. 15B are the same as Oct1 and Oct2 in FIG. 15A, and will not be repeatedly described here for the sake of brevity.

In some embodiments, if the terminal device does not know the TAG to which the cell associated with the first TA value belongs before the network device indicates the predicted first TA value to the terminal device, the network device may directly indicate cell index information in the TAC, that is, carry a PCI, a PCI index, or a configuration index of a candidate cell. Exemplarily, reference is made to another TAC structure diagram illustrated in FIGS. 16A and 16B. On the basis of FIGS. 15A and 15B, cell index information with 8 bits may be added, specifically a PCI, a PCI index, or a configuration index of a candidate cell.

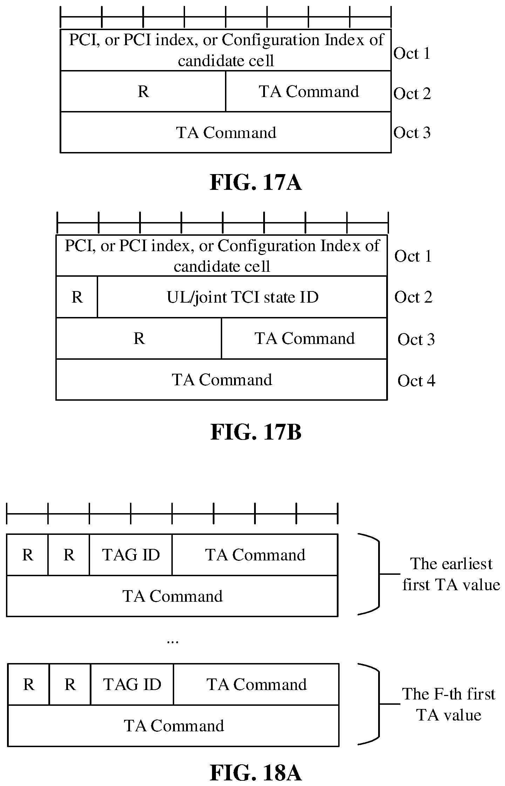

In some embodiments, the TAG ID may not be indicated in the TAC, but only the cell index information and TAC may be indicated. Exemplarily, referring to yet another TAC structure diagram illustrated in FIGS. 17A and 17B, the TAG ID in the TAC structure illustrated in FIGS. 16A and 16B may be replaced with the reserved bit R.

It should be noted that in the above examples of the TAC structure diagram, the first time period corresponding to each first TA value is predefined as an example. For example, the first time period corresponding to each first TA value may be N time domain symbols/M milliseconds beginning with the first slot/time domain symbol, which is after the terminal device has received the TAC indicating the first TA value.

In some embodiments, a first time period corresponding to each first TA value may be also included in the TAC. For example, some bits are added to the TAC, which indicate one or more of: a start moment, an end moment, or a duration length of the first time period.

Mode # B: The network device indicates all of the one or more first TA values to the terminal device by using one TA command.

In an embodiment of the present disclosure, the operation S110 that the network device sends the first information to the terminal device may be implemented in the following manner.

At a second moment, multiple first TA values are sent to the terminal device. The second moment is earlier than a start moment of a first time period corresponding to any first TA value of the multiple first TA values.

Accordingly, the terminal device may receive the first information in the following manner.

The terminal device receives the multiple first TA values at a second moment. The second moment is earlier than a start moment of a first time period corresponding to any first TA value of the multiple first TA values.

It can be understood that, before the start moments of the multiple first time periods in the future arrive, the network device may use the TAC once, and indicate the first TA values used for the multiple first time periods in the future to the terminal device.

It should be noted that the time interval between the second moment and the start moment of the first time period corresponding to the earliest first TA value among the multiple first TA values (that is, the first TA value having the earliest start moment of the first time period) may be predefined, or agreed between the network device and the terminal device, and the embodiment of the present disclosure does not limit this. For example, the time interval between the second moment and the start moment of the first time period corresponding to the earliest first TA value may be N (N > = 1) time domain symbols.

It should also be noted that, after having received the TAC command, the terminal device may automatically adjust the TA value to the first TA value only after the mobility management mechanism acts (that is, when the terminal device is determined to have accessed the first cell and/or the first spatial filter associated with a certain first TA value), so as to ensure a normal communication between the terminal device and the network device.

In some embodiments, when the TAC indicates multiple first TA values, the structures indicated by the multiple first TA values may be superimposed. Exemplarily, referring to a TAC structure diagram illustrated in FIG. 18A, the TAC may include 2 * F Octets. Every two Octets may indicate one first TA value. As illustrated in FIG. 18A, every two Octets is a group, and from top to bottom, it is used to indicate the earliest first TA value, the second first TA value, ..., and the last (F-th) first TA value, respectively. It should be noted that the specific structure of each group Octets may refer to the related description of FIG. 15A, and will not be repeated here for the sake of brevity.

In some embodiments, if the network device perform a prediction in a beam level, for example, the network device predicts the multiple TA values based on the historical measurement parameter of the SRS, the TAC may also indicate the index information of the spatial filter associated with each first TA value, for indicating a finer granularity.

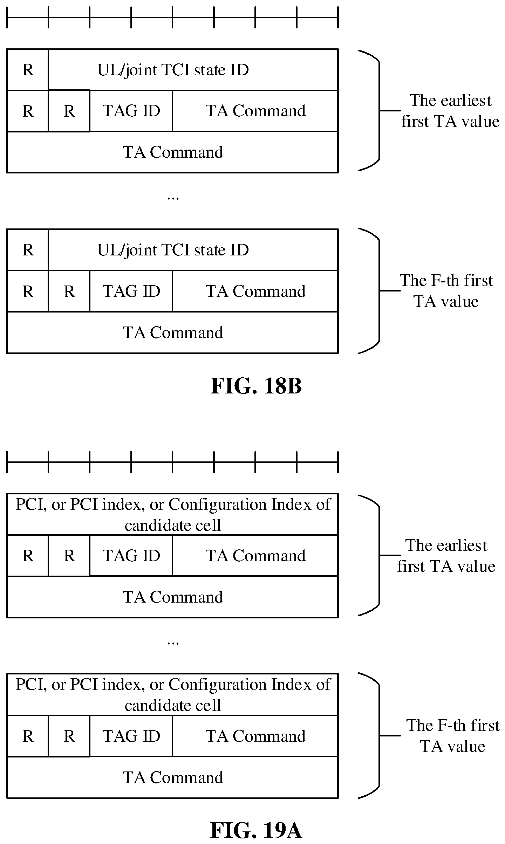

Exemplarily, referring to a TAC structure diagram illustrated in FIG. 18B, the TAC may include 3 * F Octets. Every three Octets may indicate one first TA value. As illustrated in FIG. 18B, every three Octets is a group, and from top to bottom, it is used to indicate the earliest first TA value, the second first TA value, ..., and the last (F-th) first TA value, respectively. The first Oct in each group of Octs may additionally include a UL/joint TCI state ID indicator with 7 bits, for carrying index information of the spatial filter associated with each first TA value. It should be noted that the specific structure of each group Octets may refer to the related description of FIG. 15B, and will not be repeated here for the sake of brevity.

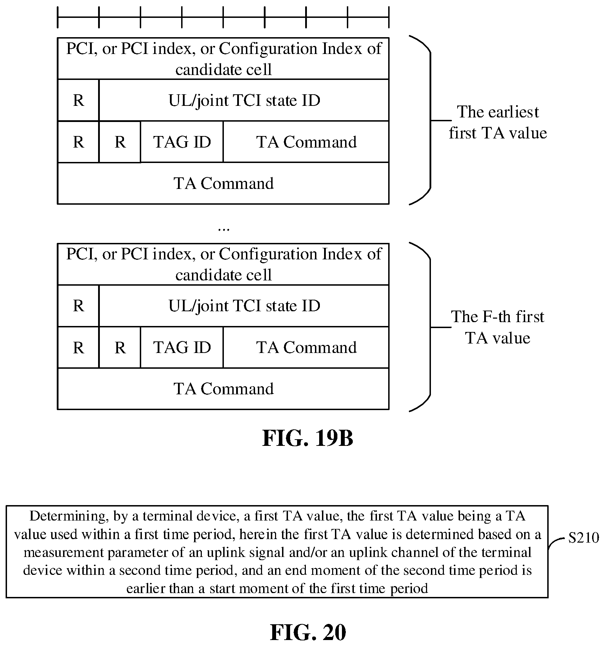

In some embodiments, if the terminal device does not know the TAG to which the cell associated with each first TA value belongs before the network device indicates the predicted multiple first TA value to the terminal device, the network device may directly indicate cell index information associated with each first TA value, that is, carry a PCI, a PCI index, or a configuration index of a candidate cell. Exemplarily, reference is made to a TAC structure diagram illustrated in FIGS. 19A and 19B. On the basis of FIGS. 18A and 18B, cell index information with 8 bits may be added into each group of Octets, specifically a PCI, a PCI index, or a configuration index of a candidate cell.

It should be noted that in the above examples of the TAC structure diagram, the first time period corresponding to each first TA value is predefined as an example. In some embodiments, a first time period corresponding to each first TA value may be also included in the TAC. For example, some bits are added to the TAC, which indicate one or more of: a start moment, an end moment, or a duration length of the first time period.

It should also be noted that although the above examples of the TAC structure diagram are described in the MAC CE format, the present disclosure does not exclude the use of other signaling formats, such as a RRC and/or DCI indication.

In some embodiments, the first information may further include index information of the first cell associated with the first TA value, and/or index information of the first spatial filter associated with the first TA value.

It should be noted that the first TA value being associated with the first cell and/or the first spatial filter may be understood as the terminal device communicates with the network device by using the first TA value when having accessed a beam corresponding to the first cell and/or the first spatial filter.

In some embodiments, the terminal device communicates with a network device by using the first TA value in case that the terminal device within the first time period is determined to have accessed a first cell and/or a first spatial filter associated with the first TA value.

As can be understood, the first TA value is a TA value used in a predicted future time period. The terminal device may automatically adjust the TA value to the first TA value only after the mobility management mechanism acts (that is, when the terminal device is determined to have accessed the first cell and/or the first spatial filter associated with the first TA value), so as to ensure a normal communication between the terminal device and the network device.

In some embodiments, the terminal device determines not to send an uplink signal and/or an uplink channel associated with the first cell and/or the first spatial filter in case that the terminal device within the first time period is determined to have accessed a first cell and/or a first spatial filter associated with the first TA value.

It can be understood that the terminal device may not send the uplink signal and/or the uplink channel associated with the first cell and/or the first spatial filter to the network device after the mobility management mechanism acts (that is, when the terminal device is determined to have accessed the first cell and/or the first spatial filter associated with the first TA value), so as to save the time-frequency resource and time overhead.

The communication method provided by the embodiment of the present disclosure has been described in detail above mainly from the perspective of the network device, and the communication method provided by the embodiment of the present disclosure will be described in detail below from the perspective of the terminal device with reference to FIG. 20.

FIG. 20 illustrates a schematic flow diagram of a communication method according to an embodiment of the present disclosure. As illustrated in FIG. 20, the method includes operation S210.

In S210, the terminal device determines a first TA value, the first TA value being a TA value used within a first time period. The first TA value is determined based on a measurement parameter of an uplink signal and/or an uplink channel of the terminal device within a second time period, and an end moment of the second time period is earlier than a start moment of the first time period.

It should be noted that the second time period can be understood as a historical/past time period. The first time period may be understood as a future/forthcoming time period.

In a possible implementation, the first TA value may be indicated by the network device. In another possible implementation, the first TA value may be determined by the terminal device itself. Hereinafter, a detailed flow of determining the first TA value by the terminal device will be described by means of Manner # A and Manner # B.

Mode # A: The first TA value is indicated by the network device. Referring to FIG. 8, the operation S210 that the terminal device determines the first TA value may be implemented in the following manner.

The terminal device receives the first information sent by the network device, and the first information is used to indicate the first TA value.

In another implementation, the first TA value may also be determined by the terminal device based on the measurement parameter of the uplink signal and/or the uplink channel within the second time period.

In some embodiments, the first information also includes index information of the first cell associated with the first TA value, and/or index information of the first spatial filter associated with the first TA value.

In some embodiments, there are multiple first TA values, the multiple first TA values correspond to multiple first time periods, and the start moments of the multiple first time periods are different.

In some embodiments, there are multiple first TA values, and the terminal device receiving the first information may be implemented by the following manner.

The terminal device receives, at each of multiple first moments, a first TA value associated with the each first moment. A first moment associated with each first TA value is earlier than a start moment of a first time period corresponding to the first TA value.

In some embodiments, there are multiple first TA values, and the terminal device receiving the first information may be implemented by the following manner.

The terminal device receives multiple first TA values at a second moment. The second moment is earlier than a start moment of a first time period corresponding to any first TA value of the multiple first TA values.

It should be noted that the manner in which the terminal device receives the first information can refer to the description in the above-described embodiment. For the sake of brevity, the description will not be repeated here.

Mode # B: The first TA value is determined by the terminal device itself. The operation S210 that the terminal device determines the first TA value may be implemented in the following manner.

The terminal device determines a first TA value based on a second TA value. The second TA value is a TA value used within a second time period, and the second TA value is determined based on a measurement parameter of an uplink signal and/or an uplink channel within the second time period.

It can be understood that the terminal device may directly determine the TA value used within the first time period by itself (denoted as the first TA value in the embodiment of the present disclosure here) based on the TA value within the second time period (denoted as the first TA value in the embodiment of the present disclosure here). That is, the terminal device may determine the first TA value within the future/future time period according to the second TA value used within the historical/past time period. In this way, the terminal device can obtain the TA value without sending the uplink signal and/or uplink channel to the network device again, thereby saving the time-frequency resource and time overhead.

In some embodiments, the terminal device determining the first TA value based on the second TA value may be implemented by the following manner.

The terminal device determines the first TA value based on the second TA value by using the third model.

It can be understood that the terminal device may input the second TA value into the third model, and predict and obtain the first TA value through processing in the third model.

The third model may be a third neural network model.

Exemplarily, the third neural network model may be an RNN model, an LSTM model, or the like, and the embodiments of the present disclosure are not limited thereto.

Exemplarily, the third neural network model may be trained and obtained by the terminal device through the process of data set construction, training, verification, and testing.

Exemplarily, the third neural network model may be trained and obtained by the terminal device in advance through offline training and/or online training.

Exemplarily, the third neural network model may be an AI model or an ML model.

It should be noted that the number of the second TA values may include one or more. That is, the terminal device may input one or more second TA values into the second model, and obtain one or more first TA values through processing in the second model.

Exemplarily, FIG. 13 illustrates a second schematic diagram of a scenario in which a network device determines a first TA value. As illustrated in FIG. 13, the terminal device sends PRACH # 1 to TRP 1 at position 1, and TRP 1 performs TA estimation and indicates TA # 1 to the terminal device. The terminal device sends PRACH # 2 to TRP 2 at position 2, and TRP2 performs TA estimation and indicates TA # 2 to the terminal device. By analogy, when the terminal device is at position K, it may send PRACH # K to TRP # K, and TRP # K performs TA estimation and indicates TA # K to the terminal device. The terminal device may acquire TA values within K (K > = 1) historical time periods (e.g., K historical slots). In this example, TA values in K historical time periods may include TA # 1 to TA # K described above. The terminal device may input TA # 1 to TA # K into the third model to obtain the first TA values (i.e. TA'#1 to TA'#F) used in F future time period (for example, F future slots). TA'#1 is used to communicate with the network device in future slot # 1, until it is switched to TA'#2 in future slot # 2 to communicate with the network device, and so on, TA'#F is used to communicate with the network device in future slot # F.

In a possible implementation, the third model may be trained and obtained by taking a TA value of the terminal device within the third time period in the actual scene as an input, and a TA value within the fourth time period in the actual scene (the TA value may be calculated, by using a traditional algorithm, according to the measurement parameter of the uplink signal and/or uplink channel sent by the terminal device within the fourth time period) as an output. The end moment of the third time period is earlier than the end moment of the fourth time period. As such, the third model may predict one or more first TA values according to the input one or more historical second TA values. That is, the input information of the third model may include only one or more second TA values.

In another possible implementation, in order to improve the prediction accuracy of the first model, the third model may be trained and obtained by taking the historical TA values of the terminal device within the third time period in the actual scene, and the index signal of the cell associated with each historical TA value and/or the index information of the associated spatial filter as inputs, and taking the TA value within the fourth time period in the actual scene (the TA value may be calculated, by using a traditional algorithm, according to the measurement parameter of the uplink signal and/or uplink channel sent by the terminal device within the fourth time period) as an output. In this way, in addition to one or more historical second TA values, the input information of the third model may include: index information of the cell associated with each historical second TA value, and/or index information of the associated spatial filter. That is, the first model predicts one or more first TA values according to the input one or more second TA values, and the index information of the cell associated with each second TA value, and/or the index information of the associated spatial filter. The prediction accuracy of the third model is improved.

It should be noted that the second TA value may be indicated by the network device. Before determining the first TA value based on the second TA value, the terminal device may further perform the following operations.

The terminal device sends an uplink signal and/or an uplink channel within a second time period, and at least one of the uplink signal or the uplink channel within the second time period is used to determine the second TA value.

The terminal device receives the second TA value sent by the network device.

It can be understood that the second TA value may be determined by the network device based on the measurement parameter of the uplink signal and/or the uplink channel of the terminal device within the second time period. That is, in a historical second time period, the network device may determine a corresponding historical TA value (i.e., a second TA value) according to the measurement parameter of the uplink signal and/or the uplink channel sent by the terminal device, and indicate the second TA value to the terminal device.

In some embodiments, the uplink signal and/or the uplink channel may include a PRACH and/or an SRS. Alternatively, the uplink signal may include an SRS, and the uplink channel may include a PRACH.

In some embodiments, the measurement parameter of the uplink signal and/or uplink channel may include, but are not limited to, one or more of: a Reference Signal Receiving Power (RSRP) of the uplink signal and/or uplink channel, or a Time of Arrive (ToA) of the uplink signal and/or uplink channel, or the like. Exemplarily, when the uplink signal and/or uplink channel includes an SRS, the measurement parameter may be an SRS-RSRP, and/or a ToA of the SRS.

It should be noted that when the terminal device sends the uplink signal and/or the uplink channel, it needs to be associated with a special downlink signal (referred to as a first downlink signal here in the embodiment of the present disclosure). The first downlink signal may be used by the terminal device to perform beamforming on the uplink signal and/or the uplink channel. That is, the terminal device may determine the spatial relationship information for sending the uplink signal and/or uplink channel based on the spatial relationship information of the first downlink signal. In short, the terminal device may determine, based on receiving the downlink beam of the first downlink signal, an uplink beam on which the terminal device sends the uplink signal and/or the uplink channel.

In some embodiments, the first downlink signal may include one or more of the following:

a downlink signal selected by the terminal device based on a downlink measurement;
a downlink signal configured by the network device; or
a dedicated downlink signal for determining first TA value.

It should be noted that the downlink signal includes, but is not limited to, an SSB and/or a CSI-RS.

As can be understood, the network device performs beam sweeping to send a downlink signal, to cover the service range of the entire cell. Beam sweeping refers to sending a downlink signal by using beams in different directions at different moments.

In a possible implementation, the terminal device may measure the received downlink signal, and select the first downlink signal based on the downlink measurement result.

For example, the first downlink signal may be an SSB selected by the terminal device from the SSB burst set by measuring the SSB in the random access procedure.

Exemplarily, the first downlink signal may be a CSI-RS selected by the terminal device according to the measurement result of the CSI-RS after the terminal device measures the CSI-RS.

In another possible implementation, the network device may directly configure the first downlink signal associated with the uplink signal and/or uplink channel for the terminal device.

Exemplarily, the first downlink signal may be an SSB configured in advance by the network device, or may be an SSB indicated by a PDCCH order.

Exemplarily, the first downlink signal may be spatial relationship information configured and/or activated by the network device for an SRS resource, for example, a UL/joint TCI state.

In yet another possible implementation, the first downlink signal may be a dedicated reference signal used for TA prediction. Exemplarily, the first downlink signal may be a CSI-RS for mobility.

In some embodiments, a sending time of the uplink signal and/or the uplink channel is determined based on a third TA value and a reception time of a first downlink signal associated with the uplink signal and/or the uplink channel, or the sending time of the uplink signal and/or the uplink channel is determined based on the reception time of the first downlink signal. The third TA value is a TA value used by the terminal device when sending the uplink signal and/or the uplink channel.

It can be understood that the time at which the terminal device sends the uplink signal and/or the uplink channel to the network device may be related to the reception time of the first downlink signal associated with the uplink signal and/or the uplink channel. Alternatively, the terminal device may send the uplink signal and/or the uplink channel to the network device based on the reception time of the first downlink signal.

In a possible implementation, the sending time of the uplink signal and/or the uplink channel may be directly based on the reception time of the first downlink signal associated with the uplink signal and/or the uplink channel. It can be understood that the terminal device may take the reception time of the first downlink signal as a starting time point for sending the uplink signal and/or the uplink channel. That is, the TA value of the terminal device sending the uplink signal and/or the uplink channel is zero, and the time at which the terminal device sends the uplink signal and/or the uplink channel may not be adjusted by the TA.

In another possible implementation, the sending time of the uplink signal and/or the uplink channel may be directly based on the third TA value and the reception time of the first downlink signal associated with the uplink signal and/or the uplink channel. It can be understood that the terminal device may use the third TA value to adjust the sending time of the uplink signal and/or the uplink channel.

Exemplarily, when the uplink signal and/or the uplink channel is PRACH, the terminal device may use the downlink reception time of the SSB as the starting time point for sending the PRACH, that is, the TA value of the PRACH is zero.

Exemplarily, when the uplink signal and/or the uplink channel is an SRS, the terminal device may adjust the sending time of the SRS by using the third TA value. The third TA value may be a TA value of the TAG where the terminal device is located. Further, the terminal device may send the SRS with reference to the downlink reception time of the SSB, that is, send the SRS that is not adjusted by the third TA.

It should be noted that when the network device configures the SRS resource set for the terminal device, the purpose of the SRS resource set may be configured. For example, the SRS resource set may be configured for beam management.

In some embodiments, the network device may configure that the purpose of the SRS resource set is "TA prediction". That is, one or more SRS resources in the SRS resource set may be used to determine TA values to be used in a future time period.

In the embodiment of the present disclosure, when the SRS is used for "TA prediction", the time at which the terminal device sends the SRS may not be adjusted by the third TA value. When the SRS is not used for "TA prediction", the terminal device adjusts the sending time of the SRS by using the third TA value.

It should be noted that the first time period and/or the second time period may be determined by one or more of: a start moment, an end moment, or a duration. Here, one or more of the start moment, the end moment, or the duration of the first time period and/or the second time period may be predefined, may be determined according to a preset rule, or may be preconfigured by the network device. The embodiment of the present disclosure does not limit this.

The start moment and the end moment may be a certain time domain symbol or a certain absolute time, and the embodiment of the present disclosure does not limit this. In addition, the unit of duration may be a relative time unit, such as a time domain symbol, a slot, a subframe, or the like. The unit of the duration may be an absolute time unit, such as microseconds (us), milliseconds (ms), seconds (s), or the like. The embodiment of the present disclosure does not limit this.

Exemplarily, a first time period and/or a second time period may be predefined. The second time period may be a time period lasting N (N >= 1) time domain symbols with the first time domain symbol of slot 1 as a start moment. The first time period may be a time period lasting N (N >= 1) time domain symbols with the first time domain symbol of slot 1 + N as a start moment. Alternatively, the second time period may be a time period lasting M (M > 0) milliseconds with the first time domain symbol of slot n as a start moment. The first time period may be a time period lasting M (M > 0) milliseconds with the first time domain symbol of slot 1 + n as a start moment.

In some embodiments, the terminal device communicates with a network device by using the first TA value in case that the terminal device within the first time period is determined to have accessed a first cell and/or a first spatial filter associated with the first TA value.

As can be understood, the first TA value is a TA value used in a predicted future time period. The terminal device may automatically adjust the TA value to the first TA value only after the mobility management mechanism acts (that is, when the terminal device is determined to have accessed the first cell and/or the first spatial filter associated with the first TA value), so as to ensure a normal communication between the terminal device and the network device.

In some embodiments, the terminal device determines not to send an uplink signal and/or an uplink channel associated with the first cell and/or the first spatial filter in case that the terminal device within the first time period is determined to have accessed a first cell and/or a first spatial filter associated with the first TA value.

It can be understood that the terminal device may not send the uplink signal and/or the uplink channel associated with the first cell and/or the first spatial filter to the network device after the mobility management mechanism acts (that is, when the terminal device is determined to have accessed the first cell and/or the first spatial filter associated with the first TA value), so as to save the time-frequency resource and time overhead.

Hereinafter, the communication method provided by the above-described embodiment will be described in detail with reference to specific application scenarios.

The embodiments of the present disclosure may use an AI/ML model. The historical measurement parameters of the uplink signal and/or the uplink channel are used as inputs of the model, and the model predicts a TA value (that is, a first TA value) to be used in the future (that is, a first time period).

It should be noted that the AI/ML model in the embodiments of the present disclosure may be deployed on the network device (NW) side or the terminal device (UE) side, thereby realizing prediction based on the historical measurement parameter of the uplink signal and/or the uplink channel.

Based on whether the AI/ML model is deployed on the UE side or the NW side, the embodiments of the present disclosure can be divided into two types of main embodiments. The corresponding signaling flow will be described below to support TA prediction.

In an implementation, the AI/ML model is deployed on the NW side. Hereinafter, a signaling flow of the AI/ML model deployed on the NW side will be described in combination with the first and second embodiments.

Embodiment 1

(1) The UE sends PRACH to different cells at K (K >= 1) different historical moments.
It should be noted that the uplink transmit beam of the UE for sending PRACH needs to be associated with a special downlink signal (that is, the first downlink channel). Specifically, the UE performs beamforming for uplink transmission by using a beam receiving the downlink reference signal. The selection principle of the downlink reference signal includes one or more of the following:

[an SSB selected from the SSB burst set by measuring the SSB in the random access procedure;
an SSB indicated by the PDCCH order;
an SSB configured in advance by NW; or
a dedicated reference signal for TA prediction. Exemplarily, the first downlink signal may be a CSI-RS for mobility.

It should be also noted that, for the sending time of the PRACH, the time for receiving SSB in the downlink serves as the starting time point for the sending. That is, the TA value of the PRACH is zero.

(2) The NW takes the TA values of K historical moments obtained based on the PRACH measurement parameters of K historical moments, and the cell index (such as a PCI, or a PCI index, or a configuration index of a candidate cell) associated with the TA value of each historical moment as the inputs of the AI/ML model. The AI/ML model outputs TA values (i.e., second TA values) for F future moments, and the cell index associated with each TA value.

It should be noted that the TA values at K historical moments may correspond to one cell or multiple cells.

Exemplarily, referring to FIG. 13, the terminal device sends PRACH # 1 to TRP 1 at position 1, and TRP 1 performs TA estimation and indicates TA # 1 to the terminal device. The terminal device sends PRACH # 2 to TRP 2 at position 2, and TRP2 performs TA estimation and indicates TA # 2 to the terminal device. By analogy, when the terminal device is at position K, it may send PRACH # K to TRP # K, and TRP # K performs TA estimation and indicates TA # K to the terminal device. The network device may acquire TA values of the terminal device within K (K > = 1) historical time periods (e.g., K historical slots). In this example, TA values in K historical time periods may include TA # 1 to TA # K described above. The network device may input TA # 1 to TA # K into the first model to obtain the first TA values (i.e. TA'#1 to TA'#F) used in F future time period (for example, F future slots). TA'#1 is used to communicate with the network device in future slot # 1, until it is switched to TA'#2 in future slot # 2 to communicate with the network device, and so on, TA'#F is used to communicate with the network device in future slot # F.

(3) NW indicates the TA values for F future moments to the terminal device.

In a possible implementation, the NW sequentially indicates TA values to the UE through F TA commands before the K moments in the future arrive.

In another possible implementation, the NW indicates all TA values to the UE by using the TA indication signaling once before K moments in the future arrives. Accordingly, the UE enables the TA value to perform the uplink synchronous transmission only after accessing the cell.

It should be note that in the access procedure of the new cell, the UE may acquire the TA value without sending the PRACH, and directly communicate by using the TA value for the future moment indicated by the NW.

Embodiment 2

(1) The UE sends SRS to different cells at K (K > = 1) different historical moments.

It should be noted that the NW may configure an SRS resource set for the UE, and the SRS resource set may include one SRS or multiple SRSs. Each SRS may correspond to a piece of spatial relationship information, or an uplink transmission spatial filter, which is only used in the high frequency band of FR2. Further, the purpose of the SRS resource set may be configured as "beam management" or "TA prediction".

It should also be noted that the UE sending an SRS may be associated with a special downlink signal (that is, the first downlink channel). Specifically, the UE performs beamforming for uplink transmission by using a beam receiving the downlink reference signal. The selection principle of the downlink reference signal includes one or more of the following:

the NW configures and/or activates spatial relationship information or a UL/joint TCI state for an SRS resource;
the UE determines the space filter for transmitting the SRS resource by itself according to the downlink reference signal measurement; or
a dedicated reference signal for TA prediction. Exemplarily, the first downlink signal may be a CSI-RS for mobility.

Different from the PRACH, the sending time of SRS is as follows:

the uplink sending time of the SRS in the NR protocol is adjusted by the TA of the TAG where the UE is located;
for the SRS for predicting the TA, the UE may send the SRS without TA adjustment, that is, may send the SRS with the downlink reception time of the SSB as a reference (the TA value is 0).

(2) The NW takes the SRS measurement parameters of K historical moments, and the cell index (such as a PCI, or a PCI index, or a configuration index of a candidate cell) associated with each SRS measurement parameter as the inputs of the AI/ML model. The AI/ML model outputs TA values (i.e., second TA values) for F future moments, and the cell index associated with each TA value.

It should be noted that the TA values at K historical moments may correspond to one cell or multiple cells.

Referring to FIG. 10, the terminal device sends SRS # 1 to TRP 1 at position 1, the terminal device sends SRS # 2 to TRP 2 at position 2, and so on, the terminal device sends SRS # K to TRP # K at position K. Here, the network device may acquire the measurement parameters of the SRS sent by the terminal device in K (K > = 1) historical time periods (for example, K historical slots). In this example, the measurement parameters of the SRS in the K historical time periods may include the measurement parameter of SRS # 1 to the measurement parameter of SRS # K. The network device may input the measurement parameter of the SRS # 1 to the measurement parameter of the SRS # K into the second model, and obtain the first TA value (i.e., TA # 1 to TA # F) used in F future time periods (for example, F future slots). In the future slot # 1, TA # 1 is used to communicate with the network device until it is switched to TA # 2 in the future slot # 2 to communicate with the network device, and so on, TA # F is used to communicate with the network device in the future slot # F.

(3) NW indicates the TA values for F future moments to the terminal device.

In a possible implementation, the NW sequentially indicates TA values to the UE through F TA commands before the K moments in the future arrive.

In another possible implementation, the NW indicates all TA values to the UE by using the TA indication signaling once before K moments in the future arrives. Accordingly, the UE enables the TA value to perform the uplink synchronous transmission only after accessing the cell.

It should be note that in the access procedure of the new cell, the UE may acquire the TA value without sending the PRACH, and directly communicate by using the TA value for the future moment indicated by the NW.

In an implementation, the AI/ML model is deployed on the UE side. Hereinafter, a signaling flow of the AI/ML model deployed on the UE side will be described in combination with the third and fourth embodiments.

Embodiment 3

(1) The UE sends PRACH to different cells at K (K > = 1) different historical moments, and receives TA values corresponding to K historical moments respectively.
[It can be understood that the NW measures the PRACH at K historical moments and estimates the TA value of the corresponding cell, and indicates the TA value to the UE by using the TA command.
(2) The UE takes the TA values of K historical moments, and the cell index (such as a PCI, or a PCI index, or a configuration index of a candidate cell) associated with each TA value as the inputs of the AI/ML model. The AI/ML model outputs TA values (i.e., second TA values) for F future moments, and the cell index associated with each TA value.
(3) When the mobility management mechanism of the UE acts, that is, after the UE switches to the cell associated with the predicted TA value, the UE will automatically adjust its TA value to the corresponding prediction value.

Embodiment 4

(1) The UE sends SRS to different cells at K (K > = 1) different historical moments, and receives K TA values.
It can be understood that the NW measures the SRS at K historical moments and estimates the TA value of the corresponding cell or beam, and indicates the TA value to the UE by using the TA command.
(2) The UE takes the K TA values, and the cell index associated with each TA value and/or the associated spatial filter index as the inputs of the AI/ML model. The AI/ML model outputs the TA values (i.e., the second TA value) for F future moments, and the cell index associated with each TA value.
(3) When the mobility management mechanism of the UE acts, that is, after the UE switches to the cell associated with the predicted TA value, the UE will automatically adjust its TA value to the corresponding prediction value.

The model is deployed on the UE side, and the delay of the TA indication can be eliminated. In addition, compared with the PRACH-based TA prediction, the SRS-based TA prediction can extend the granularity of TA prediction from a cell level to a finer beam level.

The preferred embodiments of the present disclosure have been described in detail above with reference to the accompanying drawings, but the present disclosure is not limited to the specific details in the above-described embodiments. Within the scope of the technical concept of the present disclosure, various simple modifications can be made to the technical solutions of the present disclosure, and these simple modifications all fall within the scope of protection of the present disclosure. For example, various specific technical features described in the above-described detailed description can be combined in any suitable manner without contradiction. Various possible combinations will not be described separately in this application in order to avoid unnecessary repetition. For another example, various embodiments of the present disclosure may be combined arbitrarily, and as long as they do not violate the idea of the present disclosure, they should also be regarded as the present disclosure of the present disclosure. For another example, on the premise that there is no conflict, the embodiments described in the present disclosure and/or the technical features in each embodiment can be arbitrarily combined with the prior art, and the technical solution obtained after the combination should also fall within the protection scope of the present disclosure.

It should also be understood that in various method embodiments of the present disclosure, the size of the sequence number in the above-described process does not mean the sequence of execution (the sequence of execution in each process should be determined by its function and internal logic), and should not constitute any limitation on the implementation of the embodiments of the present disclosure.

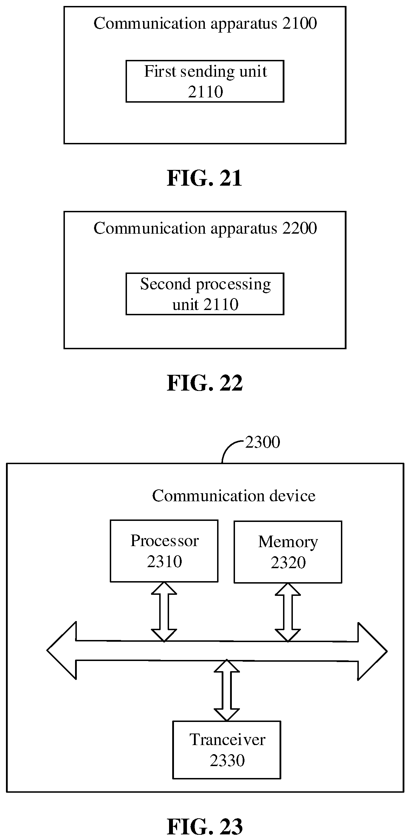

Based on the same inventive concept as the foregoing embodiments, FIG. 21 illustrates a schematic diagram of a composition structure of a communication apparatus provided by an embodiment of the present disclosure, which is applied to a network device. As illustrated in FIG. 21, the communication apparatus 2100 may include a first sending unit 2110.

The first sending unit 2110 is configured to send first information to a terminal device, the first information is used to indicate a first TA value, the first TA value being a TA value used within a first time period. The first TA value is determined based on a measurement parameter of an uplink signal and/or an uplink channel of the terminal device within a second time period, and an end moment of the second time period is earlier than a start moment of the first time period.

In some embodiments, the communication apparatus 2100 may further include a first processing unit. The first processing unit is configured to determine the first TA value based on the measurement parameter of the uplink signal and/or the uplink channel of the terminal device within the second time period.

In some embodiments, the first processing unit is configured to: acquire a second TA value, wherein the second TA value is determined based on the measurement parameter of the uplink signal and/or the uplink channel within the second time period, and the second TA value is a TA value used within the second time period; and determine, based on the second TA value, the first TA value by using a first model.

In some embodiments, there are one or more second TA values, and input information of the first model includes mulitple second TA values and at least one of:

index information of a cell associated with each second TA value, or
index information of a spatial filter associated with each second TA value.

In some embodiments, the first processing unit is further configured to determine, by using a second model, the first TA value based on the measurement parameter of the uplink signal and/or the uplink channel of the terminal device within the second time period.

In some embodiments, there are one or more measurement parameters of the uplink signal and/or the uplink channel, and input information of the second model includes multiple measurement parameters and at least one of:

index information of a cell associated with each measurement parameter;
index information of a spatial filter associated with each measurement parameter.

In some embodiments, the first information also includes index information of the first cell associated with the first TA value, and/or index information of the first spatial filter associated with the first TA value.

In some embodiments, there are multiple first TA values, the multiple first TA values correspond to multiple first time periods, and the start moments of the multiple first time periods are different.

In some embodiments, there are multiple first TA values, and the first sending unit 2110 is further configured to send, at each of multiple first moments, a first TA value associated with the each first moment to the terminal device. A first moment associated with each first TA value is earlier than a start moment of a first time period corresponding to the first TA value.

In some embodiments, there are multiple first TA values, and the first sending unit 2110 is further configured to send, at a second moment, the multiple first TA values to the terminal device. The second moment is earlier than a start moment of a first time period corresponding to any first TA value of the multiple first TA values.

In some embodiments, the uplink signal and/or the uplink channel may include a PRACH and/or an SRS.

In some embodiments, at least one of the uplink signal or the uplink channel is associated with a first downlink signal sent by the network device, and the first downlink signal includes at least one of:

a downlink signal selected by the terminal device based on a downlink measurement;

a downlink signal configured by the network device; or

a dedicated downlink signal for determining the first TA value.

In some embodiments, a sending time of the uplink signal and/or the uplink channel is determined based on a third TA value and a reception time of a first downlink signal associated with the uplink signal and/or the uplink channel, or the sending time of the uplink signal and/or the uplink channel is determined based on the reception time of the first downlink signal. The third TA value is a TA value used by the terminal device when sending the uplink signal and/or the uplink channel.

Those skilled in the art should understand that the related description of the above-described communication apparatus according to the embodiment of the present disclosure can be understood with reference to the related description of the communication method according to the embodiment of the present disclosure.

Based on the same inventive concept as the foregoing embodiments, FIG. 22 illustrates a schematic diagram of a composition structure of another communication apparatus provided by an embodiment of the present disclosure, which is applied to a terminal device device. As illustrated in FIG. 22, the communication apparatus 2200 may include a second processing unit 2210.

The second processing unit 2210 is configured to determine a first TA value, the first TA value being a TA value used within a first time period. The first TA value is determined based on a measurement parameter of an uplink signal and/or an uplink channel of the terminal device within a second time period, and an end moment of the second time period is earlier than a start moment of the first time period.

In some embodiments, the communication apparatus 2200 may include a second receiving unit. The second receiving unit is configured to receive first information. The first information is used to indicate the first TA value.

The first information also includes index information of the first cell associated with the first TA value, and/or index information of the first spatial filter associated with the first TA value.

In some embodiments, the second receiving unit is further configured to receive, at each of multiple first moments, a first TA value associated with the each first moment. A first moment associated with each first TA value is earlier than a start moment of a first time period corresponding to the first TA value.

In some embodiments, the second receiving unit is further configured to receive the multiple first TA values at a second moment. The second moment is earlier than a start moment of a first time period corresponding to any first TA value of the multiple first TA values.

In some embodiments, the second processing unit 2210 is further configured to determine a first TA value based on a second TA value. The second TA value is a TA value used within a second time period, and the second TA value is determined based on a measurement parameter of an uplink signal and/or an uplink channel within the second time period.

In some embodiments, the second processing unit 2210 is further configured to determine the first TA value based on the second TA value by using a third model.

In some embodiments, there are one or more second TA values, and input information of the third model includes mulitple second TA values and at least one of:

index information of a cell associated with each second TA value, or

index information of a spatial filter associated with each second TA value.

In some embodiments, the communication apparatus 2200 may include a second sending unit. The second sending unit is configured to send an uplink signal and/or an uplink channel within a second time period, wherein at least one of the uplink signal or the uplink channel within the second time period is used to determine the second TA value.

The second receiving unit is further configured to receive the second TA value sent by the network device.

In some embodiments, in case that within the first time period, it is determined to have accessed a first cell and/or a first spatial filter associated with the first TA value, the second processing unit is configured to communicate with a network device by using the first TA value.

In some embodiments, the second processing unit is further configured to: determine not to send an uplink signal and/or an uplink channel associated with the first cell and/or the first spatial filter in case that within the first time period, it is determined to have accessed a first cell and/or a first spatial filter associated with the first TA value.

In some embodiments, there are multiple first TA values, the multiple first TA values correspond to multiple first time periods, and the start moments of the multiple first time periods are different.

In some embodiments, the uplink signal and/or the uplink channel may include a PRACH and/or an SRS.

In some embodiments, at least one of the uplink signal or the uplink channel is associated with a first downlink signal sent by the network device, and the first downlink signal includes at least one of:

a downlink signal selected by the terminal device based on a downlink measurement;

a downlink signal configured by the network device; or

a dedicated downlink signal for determining the first TA value.

In some embodiments, a sending time of the uplink signal and/or the uplink channel is determined based on a third TA value and a reception time of a first downlink signal associated with the uplink signal and/or the uplink channel, or the sending time of the uplink signal and/or the uplink channel is determined based on the reception time of the first downlink signal. The third TA value is a TA value used by the terminal device when sending the uplink signal and/or the uplink channel.

Those skilled in the art should understand that the related description of the above-described communication apparatus according to the embodiment of the present disclosure can be understood with reference to the related description of the communication method according to the embodiment of the present disclosure.

FIG. 23 illustrates a schematic diagram of a structure of a communication device 2300 according to an embodiment of the present disclosure. As illustrated in FIG. 23, the communication device 2300 includes a processor 2310 and memory 2320. The memory 2320 may store a computer program, and the processor 2310 may call and run the computer program from the memory 2320 to implement the method in the embodiment of the present disclosure.

The memory 2320 may be a separate device independent of the processor 2310, or may be integrated in the processor 2310.

In some embodiments, as illustrated in FIG. 23, the communication device 2300 may further include a transceiver 2330. The processor 2310 may control the transceiver 2330 to communicate with other devices, specifically, may send information or data to other devices, or receive information or data sent by other devices.

Here, the transceiver 2330 may include a transmitter and a receiver. The transceiver 2330 may further include antennas, and the number of antennas may be one or more.

In some embodiments, embodiments of the present disclosure further provide a composition of another communication device. The communication device may include the communication apparatus 2100 or the communication apparatus 2200 described in any of the preceding embodiments.

In some embodiments, the communication device may be a terminal device in the embodiment of the present disclosure. The processor 2310 may call and run a computer program from the memory 2320 to implement the method implemented by the terminal device in the embodiment of the present disclosure, which will not be described herein for the sake of brevity.

In some embodiments, the communication device may be a network device in the embodiment of the present disclosure. The processor 2310 may call and run a computer program from the memory 2320 to implement the method implemented by the network device in the embodiment of the present disclosure, which will not be described herein for the sake of brevity.

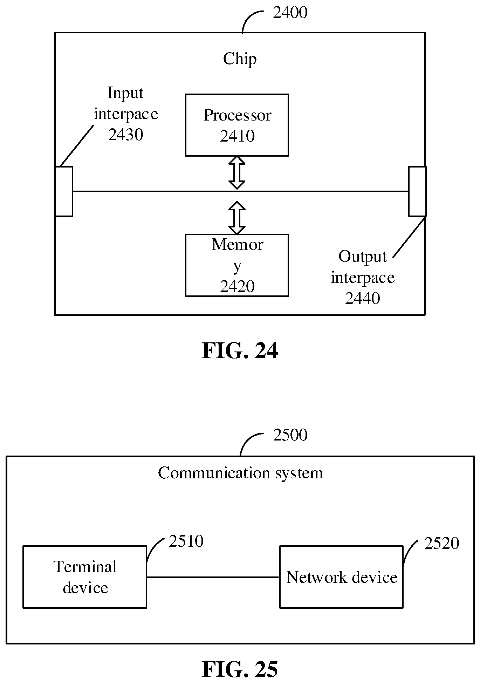

FIG. 24 illustrates a schematic diagram of a structure of a chip according to an embodiment of the present disclosure. As illustrated in FIG. 24, the chip 2400 includes a processor 2410. The processor 2410 may call and run a computer program from a memory to implement the method in the embodiment of the present disclosure.

In some embodiments, as illustrated in FIG. 24, the chip 2400 may also include a memory 2420. The processor 2410 may call and run a computer program from the memory 2420 to implement the method in the embodiment of the present disclosure.

The memory 2420 may be a separate device independent of the processor 2410, or may be integrated in the processor 2410.

In some embodiments, the chip 2400 may also include an input interface 2430. The processor 2410 may control the input interface 2430 to communicate with other devices or chips, specifically, may acquire information or data sent by other devices or chips.

In some embodiments, the chip 2400 may also include an output interface 2440. The processor 2410 may control the output interface 2440 to communicate with other devices or chips, specifically, may output information or data to other devices or chips.

In some embodiments, the chip can be applied to the network device in the embodiment of the present disclosure, and will not be repeated here for the sake of simplicity.

In some embodiments, the chip can be applied to the terminal device in the embodiment of the present disclosure, and will not be repeated here for the sake of simplicity.

It should be understood that the chip mentioned in the embodiments of the present disclosure may also be referred to as a system level chip, a system chip, a chip system, or a system-on-chip (SoC).

FIG. 25 illustrates a schematic block diagram of a communication system 2500 according to an embodiment of the present disclosure. As illustrated in FIG. 25, the communication system 2500 may include a terminal device 2510 and a network device 2520.

The terminal device 2510 may be used to implement the corresponding functions implemented by the terminal device in the above-described method, and the network device 2520 may be used to implement the corresponding functions implemented by the network device in the above-described method. For the sake of brevity, it will not be repeated here.

It can be understood that the processor in the embodiment of the present disclosure may be an integrated circuit chip having signal processing capabilities. In the implementation process, the operations of the above-described method embodiments may be completed by integrated logic circuits of hardware in the processor or instructions in the form of software. The processor described above may be a general-purpose processor, a Digital Signal Processor (DSP), an Application Specific Integrated Circuit (ASIC), an off-the-shelf Field Programmable Gate Array (FPGA) or other programmable logic device, a discrete gate or transistor logic device, or a discrete hardware component. The methods, operations, and logical block diagrams disclosed in the embodiments of the present disclosure may be implemented or executed. The general-purpose processor may be a microprocessor, or the processor may be any conventional processor or the like. The operations of the method disclosed in combination with the embodiments of the present disclosure may be directly executed by the hardware decoding processor, or may be executed by combining hardware and software modules in the decoding processor. The software module may be located in a storage medium mature in the art, such as a random access memory, a flash memory, a read-only memory, a programmable read-only memory, or an electrically erasable and writable programmable memory, a register, etc. The storage medium is located in the memory, and the processor reads the information in the memory, and combines its hardware to complete the operations of the above method.

It is also understood that the memory in the embodiments of the present disclosure may be a volatile memory or a non-volatile memory, or may include both a volatile memory and a non-volatile memory. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which serves as an external cache. By way of illustration, but not by way of limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It should be noted that the memory described herein is intended to include, but is not limited to, these and any other suitable type of memory.

It is also understood that the memory described above is exemplary but not limiting, for example, the memory in the embodiments of the present disclosure may also be a static random access memory (SRAM), a dynamic random access memory (DRAM), a synchronous dynamic random access memory (SDRAM), a double data rate synchronous dynamic random access memory (DDR SDRAM), an Enhanced SDRAM (ESDRAM), a synchronous connection dynamic random access memory (SLDRAM), and a Direct Rambus RAM (DR RAM). That is, the memory in the embodiments of the present disclosure is intended to include, but is not limited to, these and any other suitable type of memory.

An embodiment of the present disclosure also provides a computer-readable storage medium for storing a computer program.

In some embodiments, the computer-readable storage medium can be applied to the terminal device in the embodiment of the present disclosure. When the computer program is executed by at least one processor, the corresponding flow implemented by the terminal device in each method of the embodiment of the present disclosure is realized, and the description thereof will not be repeated here for the sake of brevity.

In some embodiments, the computer-readable storage medium can be applied to the network device in the embodiment of the present disclosure. When the computer program is executed by at least one processor, the corresponding flow implemented by the network device in each method of the embodiment of the present disclosure is realized, and the description thereof will not be repeated here for the sake of brevity.

An embodiment of the present disclosure also provides a computer program product including computer program instructions.

In some embodiments, the computer program product can be applied to the terminal device in the embodiment of the present disclosure, and the computer program instructions cause the computer to execute the corresponding process implemented by the terminal device in each method of the embodiment of the present disclosure, which is not described here for the sake of brevity.

In some embodiments, the computer program product can be applied to the network device in the embodiment of the present disclosure, and the computer program instructions cause the computer to execute the corresponding process implemented by the network device in each method of the embodiment of the present disclosure, which is not described here for the sake of brevity.

An embodiment of the present disclosure also provides a computer program.

In some embodiments, the computer program can be applied to the terminal device in the embodiment of the present disclosure. When the computer program is running on the computer, the computer executes the corresponding process implemented by the terminal device in each method of the embodiment of the present disclosure, which is not repeated here for the sake of brevity.

In some embodiments, the computer program can be applied to the network device in the embodiment of the present disclosure. When the computer program is running on the computer, the computer executes the corresponding process implemented by the network device in each method of the embodiment of the present disclosure, which is not described here for the sake of brevity.

Those of ordinary skill in the art will appreciate that the elements and algorithmic steps of the examples described in connection with the embodiments of the present disclosure can be implemented in electronic hardware, or a combination of computer software and electronic hardware. Whether these functions are performed in hardware or software depends on the specific application and design constraints of the technical solution. For each specific application, those skilled in the art may use different methods for implementing the described functions, but such implementations should not be considered beyond the scope of the present disclosure.

Those skilled in the art can clearly understand that for convenience and conciseness of the description, the specific working processes of the devices and units described above can refer to the corresponding processes in the aforementioned method embodiments, and will not be repeatedly described here.

It should be understood that the disclosed apparatus and method in several embodiments provided in the present disclosure, may be implemented in other manners. For example, the apparatus embodiments described above are merely schematic, for example, the division of units is only a logical function division, and there may be other division manners in actual implementation. For example, multiple units or components may be combined, or may be integrated into another system; some features may be ignored or not executed. In addition, the coupling or direct coupling or communication connection between each other illustrated or discussed may be an indirect coupling or communication connection through some interfaces, devices or units, which may be electrical, mechanical or otherwise.

The units described as separate components may or may not be physically separate, and the units displayed as units may or may not be physical units, that is, they may be located in one place or may be distributed over multiple network units. Some or all of the units may be selected according to actual needs to achieve the purpose of the solution of the present embodiment.

Furthermore, various functional units in the embodiments of the present disclosure may be integrated into one processing unit or physically present alone, or two or more units may be integrated in one unit.

If a function is implemented in the form of a software functional unit and is sold or used as an independent product, it may be stored in a computer-readable storage medium. Based on such an understanding, the technical solutions of the present disclosure, or in essence the part contributing to the prior art or the part of the technical solutions can be embodied in the form of a software product, and the computer software product is stored in a storage medium, which includes several instructions so that a computer device (may be a personal computer, a server, a network device or the like) implements all or part of the method according to respective embodiments of the present disclosure. The aforementioned storage medium includes various media capable of storing a program code such as a USB disk, a mobile hard drive disk, a Read-Only Memory (ROM), a Random Access Memory (RAM), a magnetic disk or an optical disk.

It should be noted that in the present disclosure, the terms "include", "include" or any other variation thereof are intended to encompass a non-exclusive inclusion, so that a process, method, article or apparatus including a series of elements includes not only those elements, but also other elements not explicitly listed, or elements inherent to such a process, method, article or apparatus. Without further limitation, an element defined by the statement "including a" does not preclude the presence of additional identical elements in a process, method, article, or apparatus that includes the element.

The above-described serial numbers of the embodiments of the present disclosure are for description only, and do not represent the advantages and disadvantages of the embodiments.

The methods disclosed in several method embodiments provided in the present disclosure can be arbitrarily combined as long as there is no conflict, to obtain new method embodiments.

The features disclosed in several product embodiments provided in the present disclosure can be arbitrarily combined as long as there is no conflict, to obtain new product embodiments.

The features disclosed in several method or device embodiments provided in the present disclosure can be arbitrarily combined as long as there is no conflict, to obtain new method or device embodiments.

The above are merely detailed embodiments of the present disclosure, but the protection scope of the present disclosure is not limited thereto, and any person skilled in the art can easily think of changes or substitutions within the technical scope disclosed in the present disclosure, which should be covered within the protection scope of the present disclosure. Therefore, the protection scope of the present disclosure should be based on the protection scope of the claims.

**Claims**

1.  A communication method, comprising:
    sending, by a network device, first information to a terminal device, the first information being used to indicate a first timing advance (TA) value, the first TA value being a TA value used within a first time period, wherein the first TA value is determined based on a measurement parameter of an uplink signal and/or an uplink channel of the terminal device within a second time period, and an end moment of the second time period is earlier than a start moment of the first time period.

2. The method of claim 1, further comprising:
determining, by the network device, the first TA value based on the measurement parameter of the uplink signal and/or the uplink channel of the terminal device within the second time period.

3. The method of claim 2, wherein determining, by the network device, the first TA value based on the measurement parameter of the uplink signal and/or the uplink channel of the terminal device within the second time period comprises:

acquiring, by the network device, a second TA value, wherein the second TA value is determined based on the measurement parameter of the uplink signal and/or the uplink channel within the second time period, and the second TA value is a TA value used within the second time period;
determining, by the network device, the first TA value based on the second TA value by using a first model.

4. The method of claim 3, wherein there are one or more second TA values, and input information of the first model comprises a plurality of second TA values and at least one of:

index information of a cell associated with each second TA value, or
index information of a spatial filter associated with each second TA value.

5. The method of claim 2, wherein determining, by the network device, the first TA value based on the measurement parameter of the uplink signal and/or the uplink channel of the terminal device within the second time period comprises:
determining, by the network device and using a second model, the first TA value based on the measurement parameter of the uplink signal and/or the uplink channel of the terminal device within the second time period.

6. The method of claim 5, wherein there are one or more measurement parameters of the uplink signal and/or the uplink channel, and input information of the second model comprises a plurality of measurement parameters and at least one of:

index information of a cell associated with each measurement parameter; or
index information of a spatial filter associated with each measurement parameter.

7. The method of any one of claims 1-6, wherein the first information further comprises: index information of a first cell associated with the first TA value, and/or index information of a first spatial filter associated with the first TA value.

8. The method of any one of claims 1-7, wherein there are a plurality of first TA values, the plurality of first TA values correspond to a plurality of first time periods, and start moments of the plurality of first time periods are different.

9. The method of any one of claims 1-8, wherein there are a plurality of first TA values, and sending, by the network device, the first information to the terminal device comprises:
sending, at each of a plurality of first moments, a first TA value associated with the each first moment to the terminal device, wherein a first moment associated with each first TA value is earlier than a start moment of a first time period corresponding to the first TA value.

10. The method of any one of claims 1-8, wherein there are a plurality of first TA values, and sending, by the network device, the first information to the terminal device comprises:
sending, at a second moment, the plurality of first TA values to the terminal device, wherein the second moment is earlier than a start moment of a first time period corresponding to any first TA value of the plurality of first TA values.

11. The method of any one of claims 1-10, wherein at least one of the uplink signal or the uplink channel comprises: a physical random access channel (PRACH), and/or a sounding reference signal (SRS).

12. The method of any one of claims 1-11, wherein at least one of the uplink signal or the uplink channel is associated with a first downlink signal sent by the network device, and the first downlink signal comprises at least one of:

a downlink signal selected by the terminal device based on a downlink measurement;
a downlink signal configured by the network device; or
a dedicated downlink signal for determining the first TA value.

13. The method of any one of claims 1-12, wherein a sending time of the uplink signal and/or the uplink channel is determined based on a third TA value and a reception time of a first downlink signal associated with the uplink signal and/or the uplink channel, or the sending time of the uplink signal and/or the uplink channel is determined based on the reception time of the first downlink signal; the third TA value is a TA value used by the terminal device when sending the uplink signal and/or the uplink channel.

14. A communication method, comprising:
determining, by a terminal device, a first timing advance (TA) value, the first TA value being a TA value used within a first time period, wherein the first TA value is determined based on a measurement parameter of an uplink signal and/or an uplink channel of the terminal device within a second time period, and an end moment of the second time period is earlier than a start moment of the first time period.

15. The method of claim 14, wherein determining, by the terminal device, the first TA value comprises:
receiving, by the terminal device, first information, wherein the first information is used to indicate the first TA value.

16. The method of claim 15, wherein the first information further comprises: index information of a first cell associated with the first TA value, and/or index information of a first spatial filter associated with the first TA value.

17. The method of claim 14 or 15, wherein there are a plurality of first TA values, and receiving, by the terminal device, the first information comprises:
receiving, by the terminal device and at each of a plurality of first moments, a first TA value associated with the each first moment, wherein a first moment associated with each first TA value is earlier than a start moment of a first time period corresponding to the first TA value.

18. The method of any one of claims 14-17, wherein receiving, by the terminal device, the first information comprises:
receiving, by the terminal device, the plurality of first TA values at a second moment, wherein the second moment is earlier than a start moment of a first time period corresponding to any first TA value of the plurality of first TA values.

19. The method of claim 14, wherein determining, by the terminal device, the first TA value comprises:
determining, by the terminal device, a first TA value based on a second TA value, wherein the second TA value is a TA value used within a second time period, and the second TA value is determined based on a measurement parameter of an uplink signal and/or an uplink channel within the second time period.

20. The method of claim 19, wherein determining, by the terminal device, the first TA value based on the second TA value comprises:
determining, by the terminal device, the first TA value based on the second TA value by using a third model.

21. The method of claim 20, wherein there are one or more second TA values, and input information of the third model comprises a plurality of second TA values and at least one of:

index information of a cell associated with each second TA value, or
index information of a spatial filter associated with each second TA value.

22. The method of any one of claims 19-21, wherein before determining, by the terminal device, the first TA value based on the second TA value, the method further comprises:

sending, by the terminal device, the uplink signal and/or the uplink channel within a second time period, wherein at least one of the uplink signal or the uplink channel within the second time period is used to determine the second TA value; and
receiving, by the terminal device, the second TA value sent by the network device.

23. The method of any one of claims 14-22, further comprising:
communicating, by the terminal device, with a network device by using the first TA value in case that the terminal device within the first time period is determined to have accessed a first cell and/or a first spatial filter associated with the first TA value.

24. The method of any one of claims 14-23, further comprising:
determining, by the terminal device, not to send an uplink signal and/or an uplink channel associated with a first cell and/or a first spatial filter in case that the terminal device within the first time period is determined to have accessed the first cell and/or the first spatial filter associated with the first TA value.

25. The method of any one of claims 14-25, wherein there are a plurality of first TA values, the plurality of first TA values correspond to a plurality of first time periods, and start moments of the plurality of first time periods are different.

26. The method of any one of claims 14-25, wherein at least one of the uplink signal or the uplink channel comprises: a physical random access channel (PRACH), and/or a sounding reference signal (SRS).

27. The method of any one of claims 14-26, wherein at least one of the uplink signal or the uplink channel is associated with a first downlink signal sent by the network device, and the first downlink signal comprises at least one of:

a downlink signal selected by the terminal device based on a downlink measurement;
a downlink signal configured by the network device; or
a dedicated downlink signal for determining the first TA value.

28. The method of any one of claims 14-27, wherein a sending time of the uplink signal and/or the uplink channel is determined based on a third TA value and a reception time of a first downlink signal associated with the uplink signal and/or the uplink channel, or the sending time of the uplink signal and/or the uplink channel is determined based on the reception time of the first downlink signal; the third TA value is a TA value used by the terminal device when sending the uplink signal and/or the uplink channel.

29. A communication apparatus, comprising:
a first sending unit, configured to send first information to a terminal device, the first information comprising a first timing advance (TA) value, the first TA value being a TA value used within a first time period, wherein the first TA value is determined based on a measurement parameter of an uplink signal and/or an uplink channel of the terminal device within a second time period, and an end moment of the second time period is earlier than a start moment of the first time period.

30. A communication apparatus, comprising:
a second processing unit, configured to determine a first timing advance (TA) value, the first TA value being a TA value used within a first time period, wherein the first TA value is determined based on a measurement parameter of an uplink signal and/or an uplink channel of the terminal device within a second time period, and an end moment of the second time period is earlier than a start moment of the first time period.

31. A communication device, comprising: a memory for storing a computer program, and a processor for calling and running the computer program stored in the memory to execute the method of any one of claims 1-13 or the method of any one of claims 14-28.

32. A chip, comprising: a processor for calling and running a computer program in a memory, to cause a device on which the chip is mounted to execute the method of any one of claims 1-13 or the method of any one of claims 14-28.

33. A computer-readable storage medium, having stored thereon a computer program that, when executed by at least one processor, implements the method of any one of claims 1-13 or the method of any one of claims 14-28.

34. A computer program product, comprising: computer program instructions that cause a computer to execute the method of any one of claims 1-13 or the method of any one of claims 14-28.

35. A computer program, causing a computer to execute the method of any one of claims 1-13 or the method of any one of claims 14-28.

| TAG ID | TA Command | Oct 1 |
|--------|-----------|-------|

**FIG. 1**

| R | R | R | R | TA Command | Oct 1 |
|---|---|---|---|-----------|-------|
| TA Command ||||| Oct 2 |

**FIG. 2**

| R | TA Command | Oct 1 |
|---|-----------|-------|
| TA Command | UpLink Grant | Oct 2 |
| UpLink Grant || Oct 3 |
| UpLink Grant || Oct 4 |
| UpLink Grant || Oct 5 |
| Temporary C-RNTI || Oct 6 |
| Temporary C-RNTI || Oct 7 |

**FIG. 3**

| Downlink frame i |
|---|

| Uplink frame i |
|---|

$$\left(N_{\text{TA}} + N_{\text{TA,offsetc}}\right) * T_{\text{c}}$$

**FIG. 4**

a1

w1

a2

w2

⋮

wn

an

Sum

f

t

1

b

**FIG. 5**

Input layer

Output layer

Hidden layers

**FIG. 6**

31

Network
device

Terminal
device

S110: sending first information, the first information being used to
indicate a first timing advance (TA) value, the first TA value being a
TA value used within a first time period, herein the first TA value is
determined based on a measurement parameter of an uplink signal
and/or an uplink channel of the terminal device within a second time
period, and an end moment of the second time period is earlier than
a start moment of the first time period

**FIG. 7**

Network
device

Terminal
device

S100: determining, by the network device, the first
TA value based on the measurement parameter of the
uplink signal and/or the uplink channel within the
second time period

S110: sending first information, the first information being used to
indicate a first timing advance (TA) value, the first TA value being a
TA value used within a first time period, herein the first TA value is
determined based on a measurement parameter of an uplink signal
and/or an uplink channel of the terminal device within a second time
period, and an end moment of the second time period is earlier than
a start moment of the first time period

**FIG. 8**

Network device

Terminal device

S1001: determining, by the network device and using a second model, the first TA value based on the measurement parameter of the uplink signal and/or the uplink channel of the terminal device within the second time period

S110: sending first information, the first information being used to indicate a first timing advance (TA) value, the first TA value being a TA value used within a first time period, herein the first TA value is determined based on a measurement parameter of an uplink signal and/or an uplink channel of the terminal device within a second time period, and an end moment of the second time period is earlier than a start moment of the first time period

## FIG. 9

TRP #K

TRP #X

TA#1

TA#F

SRS #K

Position K

SRS #1

Position 1

TRP #1

TRP #Y

## FIG. 10

```
┌──────────────┐        ┌──────────────┐        ┌──────────────┐
│  LSTM unit K │──────▶ ··· │  LSTM unit 2 │──────▶ │  LSTM unit 1 │──────▶
└──────────────┘        └──────────────┘        └──────────────┘
       ▲                       ▲                       ▲
       │                       │                       │
```

TA values
for the F slots in the future,
and the index information of
the associated cells and/or
the index information of the
associated spatial filters

SRS measurement
parameter of the (K-1)-th
slot in the past, and the
index information of the
associated cell and/or the
index information of the
associated spatial filter

SRS measurement
parameter of the first slot in
the past, and the index
information of the associated
cell and/or the index
information of the associated
spatial filter

SRS measurement
parameter of the 0-th slot in
the past, and the index
information of the associated
cell and/or the index
information of the associated
spatial filter

**FIG. 11**

Network device

Terminal device

S1002: acquiring a second TA value, herein the second TA value is determined based on the measurement parameter of the uplink signal and/or the uplink channel within the second time period, and the second TA value is a TA value used within the second time period

S1003: determining the first TA value based on the second TA value by using a first model

S110: sending first information, the first information being used to indicate a first timing advance (TA) value, the first TA value being a TA value used within a first time period, herein the first TA value is determined based on a measurement parameter of an uplink signal and/or an uplink channel of the terminal device within a second time period, and an end moment of the second time period is earlier than a start moment of the first time period

**FIG. 12**

**FIG. 13**

EP 4 757 463 A1

LSTM unit K → ⋯ → LSTM unit 2 → LSTM unit 1 →

TA values for the F slots in the future, and the index information of the associated cells and/or the index information of the associated spatial filters

TA value of the (K-1)-th slot in the past, and the index information of the associated cell and/or the index information of the associated spatial filter

TA value of the first slot in the past, and the index information of the associated cell and/or the index information of the associated spatial filter

TA value of the 0-th slot in the past, and the index information of the associated cell and/or the index information of the associated spatial filter

**FIG. 14**

| R | R | TAG ID | TA Command | Oct 1 |
|---|---|--------|------------|-------|
| TA Command | | | | Oct 2 |

**FIG. 15A**

| R | UL/joint TCI state ID | | | Oct 1 |
|---|---|---|---|-------|
| R | R | TAG ID | TA Command | Oct 2 |
| TA Command | | | | Oct 3 |

**FIG. 15B**

| PCI, or PCI index, or Configuration Index of candidate cell | | | | Oct 1 |
|---|---|---|---|-------|
| R | R | TAG ID | TA Command | Oct 2 |
| TA Command | | | | Oct 3 |

**FIG. 16A**

| PCI, or PCI index, or Configuration Index of candidate cell | | | | Oct 1 |
|---|---|---|---|-------|
| R | UL/joint TCI state ID | | | Oct 2 |
| R | R | TAG ID | TA Command | Oct 3 |
| TA Command | | | | Oct 4 |

**FIG. 16B**

| PCI, or PCI index, or Configuration Index of candidate cell | | Oct 1 |
|---|---|---|
| R | TA Command | Oct 2 |
| TA Command | | Oct 3 |

**FIG. 17A**

| PCI, or PCI index, or Configuration Index of candidate cell | | Oct 1 |
|---|---|---|
| R | UL/joint TCI state ID | Oct 2 |
| R | TA Command | Oct 3 |
| TA Command | | Oct 4 |

**FIG. 17B**

| R | R | TAG ID | TA Command |
|---|---|---|---|
| TA Command | | | |

The earliest first TA value

...

| R | R | TAG ID | TA Command |
|---|---|---|---|
| TA Command | | | |

The F-th first TA value

**FIG. 18A**

| R | UL/joint TCI state ID | | |
|---|---|---|---|
| R | R | TAG ID | TA Command |
| TA Command | | | |

The earliest first TA value

...

| R | UL/joint TCI state ID | | |
|---|---|---|---|
| R | R | TAG ID | TA Command |
| TA Command | | | |

The F-th first TA value

## FIG. 18B

| PCI, or PCI index, or Configuration Index of candidate cell | | | |
|---|---|---|---|
| R | R | TAG ID | TA Command |
| TA Command | | | |

The earliest first TA value

...

| PCI, or PCI index, or Configuration Index of candidate cell | | | |
|---|---|---|---|
| R | R | TAG ID | TA Command |
| TA Command | | | |

The F-th first TA value

## FIG. 19A

| PCI, or PCI index, or Configuration Index of candidate cell | | | |
|---|---|---|---|
| R | UL/joint TCI state ID | | |
| R | R | TAG ID | TA Command |
| TA Command | | | |

The earliest first TA value

...

| PCI, or PCI index, or Configuration Index of candidate cell | | | |
|---|---|---|---|
| R | UL/joint TCI state ID | | |
| R | R | TAG ID | TA Command |
| TA Command | | | |

The F-th first TA value

**FIG. 19B**

| Determining, by a terminal device, a first TA value, the first TA value being a TA value used within a first time period, herein the first TA value is determined based on a measurement parameter of an uplink signal and/or an uplink channel of the terminal device within a second time period, and an end moment of the second time period is earlier than a start moment of the first time period |
|---|

S210

**FIG. 20**

Communication apparatus 2100

First sending unit
2110

**FIG. 21**

Communication apparatus 2200

Second processing
unit 2110

**FIG. 22**

2300

Communication device

Processor
2310

Memory
2320

Tranceiver
2330

**FIG. 23**

2400

Chip

Input
interpace
2430

Processor
2410

Memor
y
2420

Output
interpace
2440

**FIG. 24**

2500

Communication system

2510

Terminal
device

2520

Network device

**FIG. 25**

## INTERNATIONAL SEARCH REPORT

| International application No. |
| --- |
| **PCT/CN2023/110704** |

| A. | CLASSIFICATION OF SUBJECT MATTER |
| --- | --- |

H04W 72/1268(2023.01)i

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

ENTXT, DWPI, CNTXT, CNKI, 3GPP: 定时提前, 测量, 参数, 时间段, 时刻, 模型, 索引, 滤波器, 参考信号, timing advance, TA, measurement, parameter, period, model, index, filter, RS

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 108307495 A (HUAWEI TECHNOLOGIES CO., LTD.) 20 July 2018 (2018-07-20) description, paragraphs [0153]-[0305] | 1-35 |
| X | CN 110650527 A (ZTE CORP.) 03 January 2020 (2020-01-03) description, paragraphs [0063]-[0222] | 1-35 |
| X | WO 2008037170 A1 (DATANG MOBILE COMMUNICATIONS EQUIPMENT CO., LTD. et al.) 03 April 2008 (2008-04-03) description, page 7, line 3-page 9, line 11 | 1-35 |
| A | CN 115426707 A (SPREADTRUM COMMUNICATIONS (SHANGHAI) CO., LTD.) 02 December 2022 (2022-12-02) entire document | 1-35 |
| A | MODERATOR (HUAWEI). "Feature lead summary#3 on propagation delay compensation enhancements" *3GPP TSG RAN WG1 Meeting #104b-e, R1-2103945*, 18 April 2021 (2021-04-18), entire document | 1-35 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 April 2024** | **24 April 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/110704**

| Patent document cited in search report | | | Publication date (day/month/year) | Patent family member(s) | | | Publication date (day/month/year) |
|---|---|---|---|---|---|---|---|
| CN | 108307495 | A | 20 July 2018 | US | 2019174447 | A1 | 06 June 2019 |
| | | | | EP | 3468265 | A1 | 10 April 2019 |
| | | | | WO | 2018028340 | A1 | 15 February 2018 |
| CN | 110650527 | A | 03 January 2020 | WO | 2020001277 | A1 | 02 January 2020 |
| WO | 2008037170 | A1 | 03 April 2008 | CN | 101154984 | A | 02 April 2008 |
| CN | 115426707 | A | 02 December 2022 | None | | | |

Form PCT/ISA/210 (patent family annex) (July 2022)